(19) Europäisches Patentamt
European Patent Office
Office européen des brevets

(11) **EP 1 446 927 B1**

(12) **FASCICULE DE BREVET EUROPEEN**

(45) Date de publication et mention
de la délivrance du brevet:
**20.02.2008 Bulletin 2008/08**

(21) Numéro de dépôt: **02796808.0**

(22) Date de dépôt: **18.10.2002**

(51) Int Cl.:
*H04L 27/26* *(2006.01)*    *H04L 25/02* *(2006.01)*

(86) Numéro de dépôt international:
**PCT/FR2002/003578**

(87) Numéro de publication internationale:
**WO 2003/036898 (01.05.2003 Gazette 2003/18)**

(54) **ESTIMATION D'UN CANAL DE TRANSMISSION AVEC DES SYMBOLES PILOTES REPARTIS SELON UNE STRUCTURE MAILLEE**

SCHÄTZEN EINES ÜBERTRAGUNGSKANALS MIT IN EINER VERBANDSTRUKTUR VERTEILTEN PILOTSYMBOLEN

ESTIMATING A TRANSMISSION CHANNEL WITH PILOT SYMBOLS DISTRIBUTED IN LATTICE STRUCTURE

(84) Etats contractants désignés:
**AT BE BG CH CY CZ DE DK EE ES FI FR GB GR IE IT LI LU MC NL PT SE SK TR**

(30) Priorité: **23.10.2001 FR 0113662**

(43) Date de publication de la demande:
**18.08.2004 Bulletin 2004/34**

(73) Titulaire: **EADS Secure Networks**
**78180 Montigny le Bretonneux (FR)**

(72) Inventeurs:
• **BRUTEL, Christophe**
  **F-75015 Paris (FR)**
• **MEGE, Philippe**
  **F-92340 Bourg-La-Reine (FR)**

(74) Mandataire: **Verdure, Stéphane**
**Cabinet Plasseraud**
**52 rue de la Victoire**
**75440 Paris Cedex 09 (FR)**

(56) Documents cités:
**EP-A- 0 441 731        EP-A- 0 734 132**

• **FLOCH LE B ET AL: "CODED ORTHOGONAL FREQUENCY DIVISION MULTIPLEX" PROCEEDINGS OF THE IEEE, vol. 83, no. 6, juin 1995 (1995-06), pages 982-996, XP000518747 NEW YORK, NY, USA ISSN: 0018-9219 cité dans la demande**

**Description**

La présente invention concerne un procédé d'estimation d'un canal de transmission, ainsi que des dispositifs pour la mise en oeuvre du procédé.

Elle se rapporte au domaine des transmissions numériques par ondes porteuses radiofréquences (transmissions radio-numériques). Elle trouve des applications, notamment, dans les récepteurs des systèmes de radiocommunications numériques avec les mobiles, par exemple les systèmes de radiocommunications professionnelles (systèmes PMR, de l'anglais "Professional Mobile Radio").

Dans ces systèmes, les données numériques sont transmises par modulation d'une onde porteuse radiofréquence. Dit autrement, un signal radio est émis sur le canal de transmission, ce signal étant modulé pour porter les informations numériques à transmettre.

Par estimation du canal de transmission, on entend de façon classique l'estimation des conditions de propagation du signal radio à travers ce dernier, qui affectent le signal transmis.

On cherche à mettre en oeuvre des techniques de modulation qui offrent une meilleure résistance vis-à-vis des perturbations subies par le signal radio lors de sa transmission à travers le canal de transmission. Pour l'essentiel, ces perturbations proviennent :

- d'une part du phénomène d'évanouissement ("Fading", en anglais), qui est sélectif en fréquence dès lors qu'on dépasse la bande de cohérence (l'on parle dans ce premier cas de fading sélectif (« selective fading » en anglais)), mais qui n'est pas sélectif en fréquence dès lors que la largeur du canal est inférieure à la bande de cohérence (l'on parle dans ce dernier cas de fading plat (« flat fading » en anglais)). Ce phénomène d'évanouissement est du aux trajets multiples de propagation ("Multipaths", en anglais) qui engendrent des interférences inter-symboles (ISI, de l'anglais « Intersymbol Interference, ») aussi connues sous le vocable de distorsion intersymboles ;
- d'autre part du fait que l'amplitude et la phase du ou de chacun des trajets de propagation peuvent être statiques (en ce sens qu'elles ne varient pas au cours du temps) ou au contraire dynamiques (lorsque les conditions de propagation varient au cours du temps). Dans le cas dynamique, la fréquence de ce phénomène (appelé aussi fréquence du fading) et, d'une façon plus générale, le spectre fréquentiel du fading sont liés à la vitesse du mobile et à la fréquence porteuse du signal émis. Le modèle classique retenu pour le spectre de puissance du fading est décrit dans l'ouvrage "Microwave Mobile Communications", par William C. Jakes, Jr., Editions John Wiley & Sons, 1974, pp 19-25 ») et fait intervenir la fréquence Doppler $f_D$ donnée par :

$$f_D = \frac{V}{c} \times f_C \qquad (1)$$

où V est la vitesse du mobile, c est la vitesse de la lumière, et $f_C$ est la fréquence de la porteuse radiofréquence.

On cherche actuellement à mettre en oeuvre une modulation multiporteuse appelée OFDM (de l'anglais "Orthogonal Frequency Division Multiplexing"). Cette technique de modulation a été retenue pour la norme européenne sur les systèmes de diffusion audionumérique (systèmes DAB, de l'anglais "Digital Audio Broadcasting"). Elle consiste à répartir les données à transmettre sur un ensemble de sous-porteuses ("subcarriers" en anglais) émises en parallèle dans le signal radio. Il en résulte un effet d'évanouissement plat vis-à-vis de chaque sous-porteuse car la largeur de bande de chaque sous-porteuse est inférieure à la bande de cohérence. En outre, il en résulte une réduction de la sensibilité de la transmission vis-à-vis du phénomène de trajets multiples.

Le signal à transmettre est construit sur un réseau temps-fréquence (aussi appelé "lattice" en anglais). Un tel réseau temps-fréquence comprend un ensemble de symboles, constituant un espace à deux dimensions qui est défini par un axe des fréquences (ou axe fréquentiel) et par un axe des temps (ou axe temporel). On rappelle qu'un symbole correspond à un nombre déterminé de bits d'information, par exemple huit bits, qui prend une valeur déterminée dans un alphabet ad-hoc. Par convention, l'axe des fréquences est représenté verticalement et l'axe des temps est représenté horizontalement. Chaque symbole est repéré par un indice m suivant l'axe des fréquence, et par un indice n suivant l'axe des temps. Par convention, un symbole dont la position suivant l'axe des fréquences est définie par l'indice m, et la position suivant l'axe des temps est définie par l'indice n est en général noté $S_{m,n}$. Enfin, l'espacement entre les symboles suivant l'axe des fréquence est noté $\gamma_0$. De même, l'espacement entre les symboles suivant l'axe des temps est noté $\tau_0$.

Si l'on note S(t) un signal construit sur un tel réseau de symboles, on peut décomposer le signal S(t) sous la forme :

$$S(t) = \sum_{m,n} c_{m,n} \times e^{2 \cdot i \cdot m \cdot \gamma_0} \times g(t - n \cdot \tau_0) \qquad\qquad (2)$$

où le signe $\Sigma$ désigne l'opération de sommation ;
où les coefficients $c_{m,n}$ sont des coefficients correspondant à la valeur du symbole $S_{m,n}$ ; et,
où la fonction g(t) désigne l'impulsion de mise en forme pour la modulation

Le signal à transmettre est structuré en trames qui sont transmises successivement à travers le canal de transmission. Chaque trame comprend un nombre M de sous-porteuses adjacentes à l'intérieur d'un canal de largeur spectrale déterminée, chacune de ces sous-porteuses étant divisée en N intervalles de temps, appelés temps symboles, qui sont transmis successivement à travers le canal de transmission. La durée d'un temps symbole correspond à la durée de transmission d'un symbole. Une trame du signal comprend donc MxN symboles. Le paramètre $\gamma_0$ précité représente l'espacement entre deux sous-porteuses adjacentes, et le paramètre $\tau_0$ précité représente l'espacement entre deux symboles successifs sur une même sous-porteuse.

Dans les systèmes utilisant une modulation de type OFDM, les impulsions de mise en forme pour la modulation sont choisies de façon que chaque symbole soit orthogonal avec tous les autres symboles. On dit alors que le réseau est orthogonal. Par définition, des symboles sont orthogonaux entre eux si leur produit scalaire est nul.

Cette caractéristique permet de simplifier la démodulation.

Un exemple particulier d'une modulation du type OFDM utilisant des symboles pilotes repartis selon une structure "Lattice" est connu du document EP 0734132.

Les systèmes utilisant une modulation de type OFDM se subdivisent en deux catégories.

D'une part, les systèmes utilisant un réseau temps-fréquence de densité 1 (dits dans la suite "systèmes de densité 1", par raccourci) pour lesquels le produit $\gamma_0 \times \tau_0$ est égal à l'unité ($\gamma_0 \times \tau_0$=1). Dans ces systèmes, les symboles modulés peuvent être des symboles complexes. Les coefficients $c_{m,n}$ précités sont alors des nombres complexes. On peut écrire $c_{m,n} = a_{m,n} + i \times b_{m,n}$, où $a_{m,n}$ et $b_{m,n}$ sont des nombres réels. Ceci offre la possibilité d'employer à la fois une modulation en amplitude et une modulation en phase. En pratique, une garde doit toutefois être prise dans le domaine fréquentiel et/ou dans le domaine temporel entre deux symboles adjacents, suivant l'axe fréquentiel, respectivement suivant l'axe temporel consécutifs. Cette garde réduit sensiblement le débit maximal (exprimé en nombre de symboles par secondes, ou bauds) qui peut être écoulé à travers le canal de transmission.

D'autre part, les systèmes utilisant un réseau temps-fréquence de densité 2 (dits dans la suite "systèmes de densité 2", par raccourci) pour lesquels le produit $\gamma_0 \times \tau_0$ est égal à $\dfrac{1}{2}$ ($\gamma_0 \times \tau_0 = \dfrac{1}{2}$). Dans ces systèmes, le débit maximal (exprimé en nombre de symboles par secondes, ou bauds) est deux fois plus élevé que dans les systèmes de densité 1. Par contre, dans les systèmes de densité 2, les symboles modulés doivent être mono-dimensionnels, c'est à dire qu'ils ont soit une valeur réelle (on parle alors de symboles réels), soit une valeur imaginaire pure (on parle alors de symboles imaginaires purs). On peut écrire $c_{m,n} = a_{m,n}$ pour les symboles réels ou $c_{m,n} = i \times b_{m,n}$ pour les symboles imaginaires purs, où $a_{m,n}$ et $b_{m,n}$ sont des nombres réels. Plus précisément, si un symbole est réel, ses voisins immédiats, c'est-à-dire les symboles situés sur la même sous-porteuse dans les temps symboles immédiatement antérieur et immédiatement postérieur (par référence à l'ordre d'émission des symboles sur le canal de transmission, c'est-à-dire les symboles adjacents suivant la direction de l'axe des temps) et les symboles situés dans le même temps symbole sur les sous-porteuses placées sur les fréquences immédiatement supérieure et immédiatement inférieure (i.e., les symboles adjacents suivant la direction de l'axe des fréquences), sont imaginaires purs. A l'inverse, si un symbole est imaginaire pur, ses voisins immédiats, c'est à dire les symboles adjacents suivant la direction de l'axe des fréquences et les symboles adjacents suivant la direction de l'axe des temps, sont réels. Les systèmes de densité 2 ne nécessitent pas la présence d'une garde en fréquence ou en temps. Ils permettent donc de transporter un débit plus élevé que les systèmes de densité 1.

Dans la suite, on considèrera uniquement le cas des systèmes de densité 2. L'invention s'applique en effet aux systèmes de ce type.

Un exemple particulier d'une modulation de type OFDM dans un système de densité 2, est la modulation dite OFDM/IOTA (de l'anglais "OFDM/Isotropic Orthogonal Transform Algorithm"). La façon dont on peut définir un réseau temps-fréquence orthogonal avec une telle modulation est par exemple décrite dans l'article "Coded Orthogonal Frequency Division Multiplex", Bernard LE FLOCH et al., Proceedings of the IEEE, Vol. 83, No. 6, Juin 1995).

Les coefficients $c_{m,n}$ sont alors des nombres soit réels, soit imaginaires purs, selon le placement du symbole $S_{m,n}$ dans la trame. Ils sont donc toujours mono-dimensionnels. Ceci n'offre que la possibilité d'une modulation en amplitude. Néanmoins, il n'est pas nécessaire de garantir un temps de garde entre les symboles ou entre les sous-porteuses, ce qui présente l'avantage d'augmenter le débit de la transmission.

**EP 1 446 927 B1**

Les symboles transmis sont donc pour moitié réels et pour moitié imaginaires purs. Ces symboles sont mis en forme par l'impulsion de modulation g(t), mentionnée plus haut,. Cette impulsion s'étend sur l'axe temporel, sur une durée correspondant à plusieurs symboles, et/ou sur l'axe fréquentiel, sur des fréquences correspondant à plusieurs sous-porteuses.

A la réception d'un signal radio, on effectue une synchronisation temporelle et fréquentielle du signal reçu. Puis le signal reçu est corrélé avec le signal attendu, c'est-à-dire qu'on effectue une corrélation du signal reçu avec l'impulsion de modulation g(t). Cette corrélation peut être effectuée par différentes méthodes, par exemple en effectuant une multiplication par l'impulsion de modulation g(t) puis une FFT (de l'anglais "Fast Fourier Transform", qui signifie transformation de Fourier rapide).

Il convient ensuite de procéder à l'estimation des conditions de propagation sur le canal de transmission, c'est-à-dire l'estimation du canal de transmission, aussi appelée estimation du fading car elle produit une valeur estimée de l'évanouissement (fading) du signal transmis à travers le canal de transmission). En effet, ces conditions de propagation sont à prendre en compte pour démoduler le signal reçu, et plus précisément pour estimer la valeur des symboles transmis.

L'objet de la présente invention est de proposer une méthode d'estimation du canal convenant pour les systèmes de densité 2, c'est-à-dire les systèmes utilisant une modulation OFDM basée sur un réseau temps-fréquence de densité 2.

Selon un premier aspect de l'invention, il est en effet proposé un procédé d'estimation d'un canal de transmission à partir d'un signal reçu après transmission à travers ledit canal de transmission, ledit signal étant un signal multiporteuses construit sur un réseau temps-fréquence défini par un axe des fréquences et un axe des temps, et comprenant des trames ayant MxN symboles répartis sur M sous-porteuses dont chacune est divisée en N temps symboles déterminés, chaque trame comprenant P symboles pilotes répartis en temps et en fréquence de manière à couvrir la trame selon une structure maillée, où les nombres M, N et P sont des nombres entiers non nuls, les symboles pilotes comprenant d'une part des symboles dits symboles pilotes réels, transmis comme des symboles ayant une valeur réelle, et d'autre part des symboles dits symboles pilotes imaginaires purs, transmis comme des symboles ayant une valeur imaginaire pure, le procédé comprenant les étapes consistant à :

a) sélectionner une ou plusieurs valeurs $z_k$ du signal reçu correspondant à un ou plusieurs symboles pilotes réels de valeurs respectives $c_k$ d'une part, et une ou plusieurs valeurs $z_l$ du signal reçu correspondant respectivement à un ou plusieurs symboles pilotes imaginaires purs de valeurs respectives $c_l$ d'autre part, ces symboles pilotes étant suffisamment rapprochés à la fois suivant l'axe des fréquences et suivant l'axe des temps pour qu'il puisse être considéré que l'évanouissement ("fading") du signal à travers le canal de transmission a eu une valeur complexe $\alpha$ sensiblement identique (en module et en phase) pour ces symboles pilotes ;
b) déterminer des nombres complexes u et v et un nombre réel $\lambda$ en minimisant l'expression aux moindres carrés suivante :

$$\varepsilon_1{}^2 = \sum_k \left\| Re(z_k.u) - \lambda.c_k \right\|^2 + \sum_l \left\| Re(z_l.v) - \lambda.c_l \right\|^2$$

où le signe $\Sigma$ désigne l'opérateur sommation,
où $\|\times\|$ désigne l'opérateur valeur absolue de la variable réelle x ou le module de la variable complexe x,
où Re(w) désigne l'opérateur partie réelle du nombre complexe w,
où $\lambda$ est un nombre réel, et
où u et v sont des nombres complexes orthogonaux (c'est-à-dire que Re(u*.v)=0, où w* désigne le nombre complexe conjugué du nombre complexe w), tels que $\|u\| = \|v\|$,
c) déterminer une valeur estimée $\hat{\alpha}$ de la valeur $\alpha$ de l'évanouissement du signal à travers le canal de transmission pour les symboles pilotes concernés, en calculant :

$$\hat{\alpha} = \lambda / u.$$

L'invention permet donc d'estimer des valeurs du fading dans un système de dimension 2. Les étapes du procédé sont renouvelées en sélectionnant d'autres paires ou groupes de symboles pilotes, de manière à produire suffisamment de valeurs estimées du fading pour permettre la poursuite du canal ("Channel Tracking").

Selon un second aspect de l'invention, il est aussi proposé un dispositif comprenant des moyens pour la mise en oeuvre de ce procédé. Le dispositif comprend :

- des moyens pour sélectionner une ou plusieurs valeurs $z_k$ du signal reçu correspondant à un ou plusieurs symboles pilotes réels de valeurs respectives $c_k$ d'une part, et une ou plusieurs valeurs $z_l$ du signal reçu correspondant respectivement à un ou plusieurs symboles pilotes imaginaires purs de valeurs respectives $c_l$ d'autre part, ces symboles pilotes étant suffisamment rapprochés à la fois suivant l'axe des fréquences et suivant l'axe des temps pour qu'il puisse être considéré que l'évanouissement ("fading") du signal à travers le canal de transmission a eu une valeur complexe $\alpha$ sensiblement identique (en module en en phase) pour ces symboles pilotes ;
- des moyens pour déterminer les nombres complexes u et v et le nombre réel $\lambda$ minimisant l'expression aux moindres carrés suivante :

$$\varepsilon_1{}^2 = \sum_k \left\| \mathrm{Re}(z_k.u) - \lambda.c_k \right\|^2 + \sum_l \left\| \mathrm{Re}(z_l.v) - \lambda.c_l \right\|^2$$

où le signe $\Sigma$ désigne l'opérateur sommation,
où $\|x\|$ désigne l'opérateur valeur absolue de la variable réelle x
où u et v sont des nombres complexes orthogonaux (c'est à dire tels que $\mathrm{Re}(u^*.v)=0$) tels que $\|u\| = \|v\|$, et
où $\lambda$ est un nombre réel,
- et des moyens pour déterminer une valeur estimée $\hat{\alpha}$ de l'évanouissement du signal à travers le canal de transmission pour les symboles pilotes concernés, en calculant:

$$\hat{\alpha} = \lambda / u.$$

Selon un premier mode de mise en oeuvre du procédé, $\lambda$ est égal à l'unité, u est égal à $\beta$, et v est égal à $- i \cdot \beta$, où $\beta$ désigne l'inverse de $\alpha$,
en sorte que l'étape b) consiste à déterminer des nombres réels $\mathrm{Re}(\beta)$ et $\mathrm{Im}(\beta)$ qui minimisent l'expression aux moindres carrés suivante :

$$\varepsilon_2{}^2 = \sum_k \left\| \mathrm{Re}(z_k.\beta) - c_k \right\|^2 + \sum_l \left\| \mathrm{Im}(z_l.\beta) - c_l \right\|^2$$

où le signe $\Sigma$ désigne l'opérateur sommation,
où $\| x \|$ désigne l'opérateur valeur absolue de la variable réelle x
où $\mathrm{Re}(x)$ désigne l'opérateur partie réelle de la variable complexe x, et
où $\mathrm{Im}(x)$ désigne l'opérateur partie imaginaire de la variable complexe x ;
et en sorte que l'étape c) consiste à déterminer la valeur estimée $\hat{\alpha}$ de la valeur $\alpha$ de l'évanouissement du signal à travers le canal de transmission pour les symboles pilotes concernés, en inversant le nombre complexe $\mathrm{Re}(\beta)+i\cdot\mathrm{Im}(\beta)$.
Selon un troisième aspect de l'invention, il est aussi proposé un dispositif pour la mise en oeuvre du procédé selon ce premier mode de mise en oeuvre.
Le dispositif comprend :

- des moyens pour sélectionner une ou plusieurs valeurs $z_k$ du signal reçu correspondant à un ou plusieurs symboles pilotes réels de valeurs respectives $c_k$ d'une part, et une ou plusieurs valeurs $z_j$ du signal reçu correspondant respectivement à un ou plusieurs symboles pilotes imaginaires purs de valeurs respectives $c_l$ d'autre part, ces symboles pilotes étant suffisamment rapprochés à la fois suivant l'axe des fréquences et suivant l'axe des temps pour qu'il puisse être considéré que l'évanouissement ("fading") du signal à travers le canal de transmission a eu une valeur complexe $\alpha$ sensiblement identique pour ces symboles pilotes ;
- des moyens pour déterminer des nombres réels $\mathrm{Re}(\beta)$ et $\mathrm{Im}(\beta)$ minimisant l'expression aux moindres carrés suivante :

$$\varepsilon_2{}^2 = \sum_k \left\| \mathrm{Re}(z_k.\beta) - c_k \right\|^2 + \sum_l \left\| \mathrm{Im}(z_l.\beta) - c_l \right\|^2$$

où le signe $\Sigma$ désigne l'opérateur sommation,
où $\|x\|$ désigne l'opérateur valeur absolue de la variable réelle x
où $\mathrm{Re}(x)$ désigne l'opérateur partie réelle de la variable complexe x,
où $\mathrm{Im}(x)$ désigne l'opérateur partie imaginaire pure de la variable complexe x, et
où $\beta$ désigne l'inverse de $\alpha$ ; et,
- des moyens pour déterminer une valeur estimée $\hat{\alpha}$ de l'évanouissement du signal à travers le canal de transmission pour les symboles pilotes concernés, en inversant le nombre complexe $\mathrm{Re}(\beta)+i\cdot\mathrm{Im}(\beta)$.

Selon un second mode de mise en oeuvre du procédé, qui constitue un mode préféré, $\lambda$ est égal à $\rho$, u est égal à $e^{-i\cdot\varphi}$, et v est égal à - $i\cdot e^{-i\cdot\varphi}$, où $\rho$ et $\varphi$ sont des nombres réels qui désignent respectivement le module et la phase de $\hat{\alpha}$ ( $\hat{\alpha} = \rho\cdot e^{i\cdot\varphi}$),
en sorte que l'étape b) et l'étape c) sont réalisées conjointement et consistent à déterminer une valeur estimée $\hat{\alpha}$ de l'évanouissement du signal à travers le canal de transmission pour les symboles pilotes concernés, définie par $\hat{\alpha} = \rho\cdot e^{i\cdot\varphi}$
où $\rho$ et $\varphi$ minimisent l'expression aux moindres carrés suivante :

$$\varepsilon_3{}^2 = \sum_k \left\| \mathrm{Re}(z_k.e^{-i\cdot\varphi}) - \rho\cdot c_k \right\|^2 + \sum_l \left\| \mathrm{Im}(z_l.e^{-i\cdot\varphi}) - \rho\cdot c_l \right\|^2$$

où le signe $\Sigma$ désigne l'opérateur sommation,
où $\|x\|$ désigne l'opérateur valeur absolue de la variable réelle x
où $\mathrm{Re}(x)$ désigne l'opérateur partie réelle de la variable complexe x, et
où $\mathrm{Im}(x)$ désigne l'opérateur partie imaginaire pure de la variable complexe x.
Ce mode de mise en oeuvre est préféré car il permet d'obtenir directement la valeur de $\alpha$, en ce sens qu'il ne comprend pas d'étape finale d'inversion d'un nombre complexe. Il est donc plus rapide.
Selon un quatrième aspect de l'invention, il est enfin proposé un dispositif pour la mise en oeuvre du procédé selon ce second mode de mise en oeuvre.
Le dispositif comprend :

- des moyens pour sélectionner une ou plusieurs valeurs $z_k$ du signal reçu correspondant à un ou plusieurs symboles pilotes réels de valeurs respectives $c_k$ d'une part, et une ou plusieurs valeurs $z_l$ du signal reçu correspondant respectivement à un ou plusieurs symboles pilotes imaginaires purs de valeurs respectives $c_l$ d'autre part, ces symboles pilotes étant suffisamment rapprochés à la fois suivant l'axe des fréquences et suivant l'axe des temps pour qu'il puisse être considéré que l'évanouissement ("fading") du signal à travers le canal de transmission a eu une valeur complexe $\alpha$ sensiblement identique pour ces symboles pilotes ; et,
- des moyens pour déterminer une valeur estimée $\hat{\alpha}$ de l'évanouissement du signal à travers le canal de transmission pour les symboles pilotes concernés, définie par $\hat{\alpha} = \rho\cdot e^{i\cdot\varphi}$ où $\rho$ et $\varphi$ sont des nombres réels qui minimisent l'expression aux moindres carrés suivante :

$$\varepsilon_3{}^2 = \sum_k \left\| \mathrm{Re}(z_k.e^{-i\cdot\varphi}) - \rho\cdot c_k \right\|^2 + \sum_l \left\| \mathrm{Im}(z_l.e^{-i\cdot\varphi}) - \rho\cdot c_l \right\|^2$$

où le signe $\Sigma$ désigne l'opérateur sommation,
où $\|x\|$ désigne l'opérateur valeur absolue de la variable réelle x
où $\mathrm{Re}(x)$ désigne l'opérateur partie réelle de la variable complexe x, et
où $\mathrm{Im}(x)$ désigne l'opérateur partie imaginaire pure de la variable complexe x.

D'autres caractéristiques et avantages de l'invention apparaîtront encore à la lecture de la description qui va suivre. Celle-ci est purement illustrative et doit être lue en regard des dessins annexés sur lesquels on a représenté :

- à la figure 1 : un diagramme illustrant un réseau temps-fréquence sur lequel est construit le signal transmis sur le canal de transmission ;
- à la figure 2 : un diagramme illustrant la structure d'une trame d'un signal multiporteuses selon un exemple de réalisation de l'invention ;
- à la figure 3 : un diagramme illustrant les étapes d'un procédé de démodulation d'un signal radio reçu par un récepteur après transmission à travers un canal de transmission ;
- aux figures 4a à 4c : des diagrammes d'étapes illustrant le procédé selon l'invention respectivement dans le cas général, selon un premier mode de mise en oeuvre et selon un second mode de mise en oeuvre ;
- à la figure 5: un schéma synoptique illustrant des dispositifs selon l'invention.

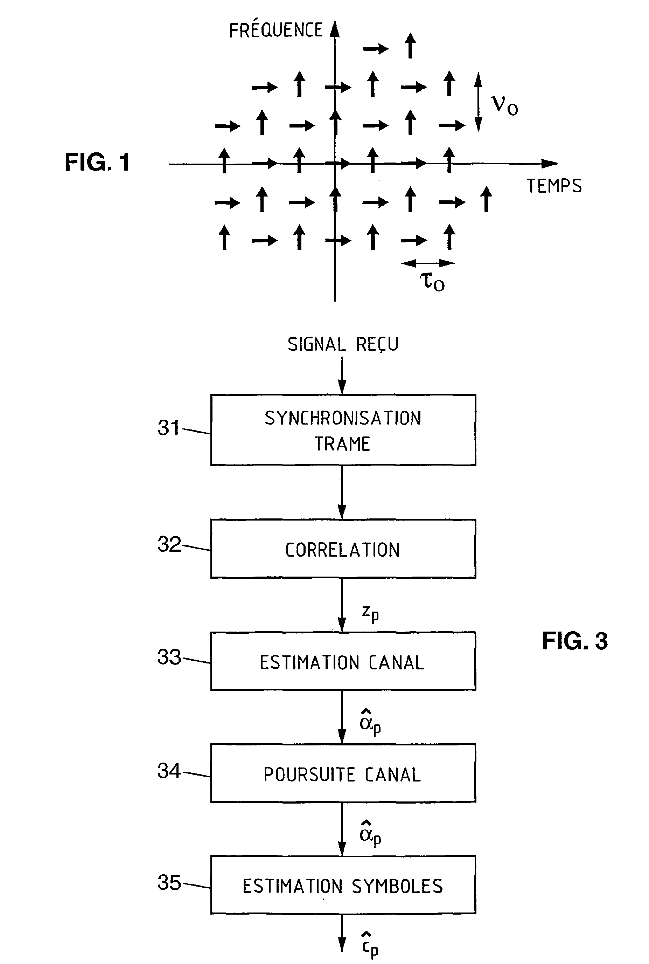

Le diagramme de la figure 1 illustre un réseau temps-fréquence d'un système de densité 2, tel que par exemple un système utilisant une modulation OFDM/IOTA.

Le réseau est défini par un axe fréquentiel (ici, l'axe vertical) et par un axe temporel (ici, l'axe horizontal). Le réseau comprend un ensemble de symboles représentés symboliquement ici par des petites flèches horizontales ou verticales. L'espacement entre les symboles suivant l'axe des fréquence est noté $-y_0$. De même, l'espacement entre les symboles suivant l'axe des temps est noté $\tau_0$. Selon des propriétés intrinsèques du réseau temps-fréquence, chaque symbole est orthogonal avec tous les autres symboles.

A la figure 1, les symboles représentés par des flèches horizontales sont des symboles réels. Ceux représentés par des flèches verticales sont des symboles imaginaires purs. Comme il a été dit en introduction, si un symbole déterminé est réel, ses voisins immédiats, c'est à dire les symboles situés directement à sa droite ou à sa gauche suivant la direction de l'axe des temps et les symboles situés directement au dessus ou au dessous de lui suivant la direction de l'axe des fréquences, sont imaginaires purs. A l'inverse, si un symbole déterminé est imaginaire pur, ses voisins immédiats (définis de la même façon que ci-dessus) sont réels. Par exemple le symbole situé à l'intersection de l'axe temporel et de l'axe fréquentiel (appelé symbole utile) est un symbole réel.

Un signal multiporteuse peut être construit sur un tel réseau temps-fréquence, en étant structuré en trames successives transmise sur le canal de transmission. Une trame est définie suivant l'axe des fréquence et suivant l'axe des temps, respectivement par une bande de fréquence B, et par une durée D. Elle comprend M sous-porteuses, où M est un nombre entier tel que $B = M \times \gamma_0$. De plus, chaque sous-porteuse est divisée en N temps symboles, où N est un nombre entier tel que $D = N \times \tau_0$. La trame comprend donc MxN symboles.

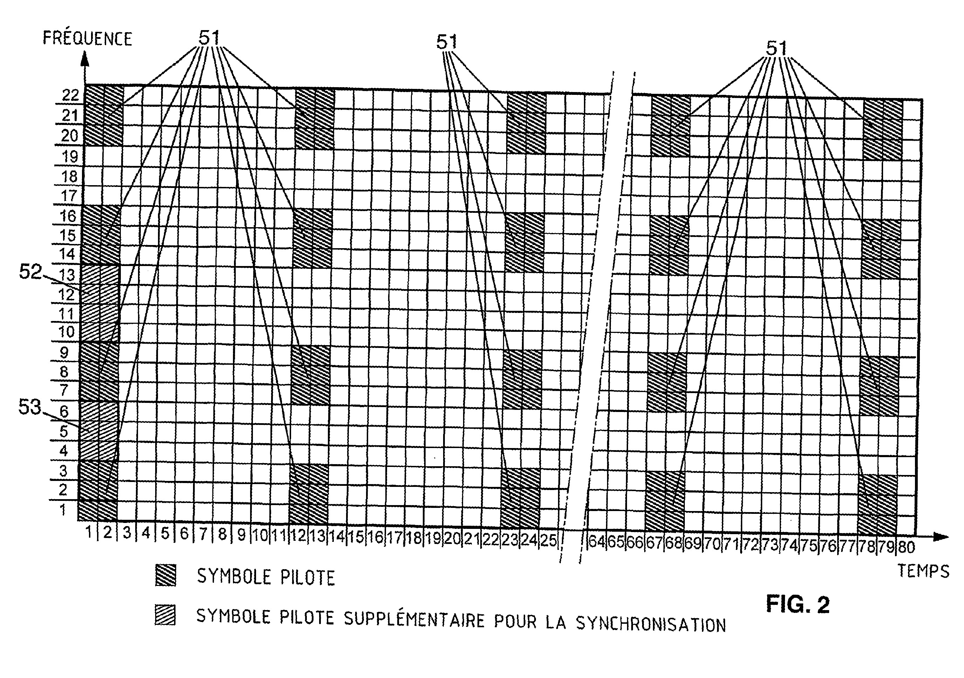

Le diagramme de la figure 2 représente la structure d'une trame d'un signal multiporteuse selon un exemple convenant pour la mise en oeuvre de l'invention.

Par convention, on définit une double relation d'ordre pour repérer l'emplacement d'un symbole dans la trame suivant l'axe des fréquence d'une part, et suivant l'axe des temps d'autre part. Selon cette relation d'ordre, le symbole $S_{1,1}$ est le symbole qui est porté sur la première sous-porteuse (celle correspondant à l'indice m égal à l'unité (m=1)) et qui est transmis en premier sur cette sous-porteuse c'est-à-dire qui est situé dans le premier temps symbole (celui correspondant à l'indice n égal à l'unité (n=1)). Ce symbole $S_{1,1}$ est représenté en bas à gauche sur la figure. De même, le symbole $S_{M,N}$ est le symbole qui est porté sur la dernière sous-porteuse de la trame (celle correspondant à l'indice m égal à M (m=M)) et qui est transmis en dernier sur cette sous-porteuse c'est-à-dire qui est situé dans le dernier temps symbole (celui correspondant à l'indice n égal à N (n=N)). Ce symbole $S_{M,N}$ est représenté en haut à droite sur la figure. De façon générale, le symbole $S_{m,n}$ est le symbole qui est porté sur la m-ième sous-porteuse de la trame (celle d'indice m) et qui est transmis sur cette sous-porteuse dans le n-ième temps symbole (celui d'indice n).

Afin de permettre la poursuite du canal, la trame contient P symboles pilotes, où P est un nombre entier en principe très inférieur à MxN. On rappelle qu'un symbole pilote est un symbole dont l'emplacement dans la trame et dont la valeur sont connus du récepteur. Les symboles pilotes sont répartis en temps et en fréquence, de manière à couvrir la trame selon une structure maillée.

Dans l'exemple représenté, le signal occupe une bande de fréquence B = 44 kHz (kilohertz) à l'intérieur d'un canal radio de 50 kHz de large. De plus l'espacement entre les sous-porteuses est $\gamma_0$ =2 kHz. La trame comporte donc M = 22 sous-porteuses.

En outre la durée de la trame est D = 20 ms (milliseconde). Le débit sur chaque sous-porteuse est de 4 kilosymboles/s (milliers de symboles par seconde), donc l'espacement temporel entre les symboles est $\tau_0$ = 250 μs. Dit autrement, la trame comporte N = 80 temps symboles.

La trame comporte donc MxN = 1760 symboles. Sur la figure, les symboles pilotes sont représentés par des cellules grises, et les autres symboles, qui correspondent à de l'information utile, sont représentés par des cellules blanches. Parmi les 1760 symboles de la trame, il y a 206 symboles qui sont des symboles pilotes. Dit autrement, P=206.

Certains des symboles pilotes, qui sont adjacents deux à deux suivant la direction de l'axe des fréquences et/ou suivant la direction de l'axe des temps, forment un bloc de symboles pilotes tels que 51 ou 53. Dans l'exemple, la trame comprend en effet des blocs de symboles pilotes. Un bloc de symboles pilotes est défini en ce sens qu'il s'agit d'un groupe de symboles pilotes, adjacents ou non suivant la direction de l'axe des fréquences et/ou suivant la direction de l'axe des temps, pour lesquels est satisfaite une double condition de stationnarité en temps et de stationnarité en fréquence du canal de transmission.

Par convention, dans la suite, la position d'un bloc de symboles pilotes dans la trame est repérée par la position du symboles pilote de ce bloc qui est sur la porteuse de plus petit indice, et dans le temps symbole transmis en premier (sur les figures, c'est, pour chaque bloc, le symbole pilote qui est le plus bas et le plus à gauche). De même, la taille du bloc est définie par une dimension suivant l'axe des fréquences (ci-après "hauteur") exprimée en nombres de symboles, et par une dimension suivant l'axe des temps (ci-après "longueur"), exprimée en nombres de symboles. La taille du bloc est notée hxl, où h désigne la hauteur et 1 désigne la longueur du bloc.

Cette convention est commode dans les cas où les blocs de symboles pilotes ont des dimensions régulières (formant pas exemples des lignes, ou des pavés de symboles pilotes c'est-à-dire des carrés ou des rectangles), comme c'est le cas dans l'exemple représenté. Néanmoins, il est bien entendu qu'un bloc de symboles pilotes peut avoir une structure irrégulière (par exemple trois symboles pilotes adjacents deux à deux mais non alignés).

En outre, il est précisé que la notion de bloc de symboles pilotes selon l'invention ne correspond pas forcément à une notion d'adjacence mais plutôt à une notion de proximité à la fois suivant la direction de l'axe des fréquences et suivant la direction de l'axe des temps. En réalité, la définition d'un bloc de symboles pilotes est la suivante : les symboles pilotes d'un même bloc, qui peuvent être adjacents ou non, sont considérés comme des symboles satisfaisant une double condition de stationnarité en fréquence et de stationnarité en temps des conditions de propagation sur le canal de transmission.

Ces deux conditions peuvent se traduire en termes d'espacement maximum des symboles pilotes, respectivement suivant la direction de l'axe fréquentiel et suivant la direction de l'axe temporel, ainsi qu'il va être explicité au paragraphe suivant. Il en résulte que les dimensions maximales d'un bloc de symboles pilotes selon l'invention dépendent des caractéristiques de la propagation, celles-ci devant donc être prises en compte lors du choix de la répartition des symboles pilotes dans la trame par le concepteur du système.

On sait que les caractéristiques de la propagation à travers le canal de transmission sont définies par la fréquence maximum des variations de l'évanouissement (appelée "fréquence de fading", dans le jargon de l'homme du métier) et le retard maximum entre les trajets multiples. Dans un exemple, pour une propagation de type HT ("Hilly Terrain") qui est la plus contraignante, il est établi que la fréquence de fading est égale à 148,2 Hz (hertz) pour une vitesse maximum de déplacement des mobiles égale à 200 Km/h (kilomètre par heure) et pour une fréquence de porteuse égale à 400 MHz (Mégahertz), d'une part, et que le retard maximum entre les trajets multiples correspond à $\pm$ 7,5 $\mu$s (microseconde), soit un retard maximum entre le trajet le plus en avance et le trajet le plus en retard de 15 $\mu$s, d'autre part.

Or, pour un débit de 4 kilosymboles/s par sous-porteuse, la trame doit comprendre des symboles pilotes (ou des blocs de pilotes) avec un espacement suivant la direction de l'axe temporel, appelé espacement temporel, qui doit être inférieur à l'inverse de la fréquence du fading, c'est-à-dire qu'elle doit comprendre un symbole pilote tous les 27 symboles au maximum.

Cet espacement maximum de 27 symboles suivant la direction de l'axe des temps correspond à un échantillonnage du canal de propagation (fading) effectué plus rapidement (même seulement légèrement plus rapidement) que l'occurrence des trous de fading (passage par zéro du fading sur l'axe temporel) successifs. Entre deux trous de fading successifs, la phase du fading a tourné de $\pi$ (nombre PI). Sur, par exemple, un dixième de cette période entre trous de fading, c'est-à-dire sur une période correspondant à 2,7 symboles successifs, le fading aura tourné de $\pi/10$. Dans la suite on considèrera pour des raisons pratiques un groupe ayant 2 symboles successifs suivant l'axe des temps. Entre ces deux symboles successifs, le fading aura tourné de $\pi/27$. Si le fading au milieu de cette période de 2 symboles a une certaine valeur $F_m$ déterminée, le fading à la fin de cette période de 2 symboles aura une valeur $F_f$ qui sera très proche de $F_m \times e^{i \cdot \pi/54}$. Donc on a une erreur quadratique donnée par :

$$\varepsilon_f^2 = \left\| F_m - F_f \right\|^2 = \left\| F_m \right\|^2 \times \left( 2 \times \sin(\pi/(2 \times 54)) \right)^2 = \left\| F_m \right\|^2 \times 0,00338 \quad (3)$$

soit un rapport signal sur bruit de : 24,71 dB.

De même si le fading au début de cette période de 2 symboles a une certaine valeur $F_d$ déterminée, on a au milieu de cette période une erreur quadratique donnée par :

$$\varepsilon_d^2 = \left\| F_m - F_d \right\|^2 = \left\| F_m \right\|^2 \times \left( 2 \times \sin(\pi/(2 \times 54)) \right)^2 = \left\| F_m \right\|^2 \times 0,00338 \quad (4)$$

soit le même rapport signal à bruit de 24,71 dB.

On peut donc considérer sans aucun inconvénient que le canal est stationnaire en temps sur une durée correspondant à deux temps symboles successifs, c'est-à-dire à deux symboles adjacents suivant la direction de l'axe des temps.

De même, pour une propagation de type HT, qui présente un retard maximum entre trajets de 15 $\mu$s, et pour un espacement entre sous-porteuses de 2 kHz, la trame doit comprendre des symboles pilotes avec un espacement suivant l'axe des fréquences, appelé espacement fréquentiel, qui doit être inférieur à l'inverse du retard maximum entre les trajets multiples, soit un symbole pilote toutes les 33 sous-porteuses au maximum.

Cet espacement de 33 sous-porteuses suivant la direction de l'axe des fréquences correspond à un échantillonnage du canal en fréquentiel plus fréquemment (même seulement légèrement plus fréquemment) que l'occurrence des trous de sélectivité fréquentielle (passage par zéro du niveau du signal reçu à certaines fréquences) successifs. Entre deux trous de sélectivité fréquentielle successifs la phase du fading a tourné de $\pi$. Sur, par exemple, un dixième de cet espace entre trous de sélectivité fréquentielle, c'est-à-dire sur une bande de fréquence correspondant à 3,3 sous-porteuses, le fading aura tourné de $\pi/10$. On considèrera, pour des raisons pratiques, une bande correspondant à 3 sous-porteuses. Entre les sous-porteuses extrêmes de cette bande, le fading aura tourné de $(\pi/33) \times 2$. Si le fading au milieu de la bande de fréquence comprenant ces 3 sous-porteuses a une certaine valeur $F_m$ déterminée, le fading pour la sous-porteuse la plus élevée en fréquence de ce groupe de 3 sous-porteuses aura une valeur $F_f$ qui sera très proche de $F_m \times e^{i \cdot \pi/33}$).

Donc on a une erreur quadratique donnée par :

$$\varepsilon_f^2 = \left\| F_m - F_f \right\|^2 = \left\| F_m \right\|^2 \times \left(2 \times \sin\left(\pi/(2 \times 33)\right)\right)^2 = \left\| F_m \right\|^2 \times 0,00906 \quad (5)$$

soit un rapport signal sur bruit de 20,43 dB.

De même si le fading pour la sous-porteuse la moins élevée en fréquence de ce groupe de 3 sous-porteuses a une valeur $F_d$ déterminée, on a en milieu de cette période une erreur quadratique donnée par :

$$\varepsilon_d^2 = \left\| F_m - F_d \right\|^2 = \left\| F_m \right\|^2 \times \left(2 \times \sin\left(\pi/(2 \times 33)\right)\right)^2 = \left\| F_m \right\|^2 \times 0,00906 \quad (6)$$

soit le même rapport signal à bruit de 20,43 dB.

On peut donc considérer sans aucun inconvénient que le canal est stationnaire en fréquence sur une bande de fréquence correspondant trois sous-porteuses adjacentes, c'est-à-dire à trois symboles adjacents suivant la direction de l'axe des fréquences.

En conséquence de ce qui précède, des symboles pilotes qui ne sont pas espacés de plus de deux symboles suivant l'axe des temps ni de plus de trois symboles suivant l'axe des fréquences peuvent être considérés comme satisfaisant une double condition de stationnarité en temps et en fréquence, des conditions de propagation sur le canal de transmission (i.e. du fading).

On notera que les considérations sur la stationnarité du fading exposées ci-dessus, sont à évaluer en fonction du problème à traiter, c'est-à-dire notamment des caractéristiques de la propagation envisagée, de la vitesse du mobile, et de la fréquence porteuse.

Dans le cas général, cela revient à dire que, dès lors que des symboles pilotes sont suffisamment rapprochés à la fois suivant l'axe des fréquences et suivant l'axe des temps, on peut considérer que l'évanouissement ("fading") du signal à travers le canal de transmission a une valeur complexe sensiblement identique pour ces symboles pilotes.

En conclusion, on peut ainsi donner la définition d'un bloc de symboles pilotes au sens de la présente invention : un bloc de symboles pilotes selon l'invention est défini en ce sens qu'il s'agit d'un groupe de symboles pilotes, adjacents ou non suivant la direction de l'axe des temps et/ou suivant la direction de l'axe des fréquences, pour lesquels est satisfaite une double condition de stationnarité en temps et de stationnarité en fréquence des conditions de propagation sur le canal de transmission. On pourra alors faire l'hypothèse que les symboles d'un tel bloc ont été affectés d'un fading ayant une valeur identique (en module et en phase).

Dans l'exemple représenté à la figure 2, la trame comprend au moins un bloc de six symboles pilotes de dimensions 3x2, c'est-à-dire dont les dimensions suivant l'axe des fréquences et suivant l'axe des temps correspondent respectivement à trois symboles (h=3) et à deux symboles (l=2).

Selon l'exemple, la trame comporte plus exactement 32 blocs tels que 51, ayant six symboles pilotes chacun, dont les dimensions suivant l'axe des fréquences et suivant l'axe des temps correspondent respectivement à trois symboles et à deux symboles. Leurs emplacements respectifs dans la trame, repérés par l'emplacement du symbole pilote du bloc considéré qui est dans la sous-porteuse de fréquence la plus basse et dans le temps symbole transmis en premier (i.e., le symbole le plus en bas et le plus à gauche), sont les emplacements des symboles $S_{m,n}$ (on rappelle que m et n sont des indices entiers qui repèrent la position du symbole suivant l'axe des fréquences et suivant l'axe des temps respectivement), avec m compris dans l'ensemble {1,7,14,20} et avec n=1+11×, où j est un nombre entier compris dans l'ensemble [0;7].

La trame comporte en outre un premier bloc supplémentaire 52 de six symboles pilotes dont les dimensions suivant l'axe des fréquences et suivant l'axe des temps correspondent respectivement à trois symboles et à deux symboles.

Elle comporte aussi un second bloc supplémentaire 53 de huit symboles pilotes dont les dimensions suivant l'axe des fréquences et suivant l'axe des temps correspondent respectivement à quatre symboles et à deux symboles.

Les emplacements respectifs du bloc supplémentaire 52 et du bloc supplémentaire 53 dans la trame, repérés par l'emplacement du symbole pilote du bloc considéré qui est dans la sous-porteuse de fréquence la plus basse et dans le temps symbole transmis en premier (i.e., le symbole le plus en bas et le plus à gauche), sont les emplacements des symboles $S_{m,n}$ avec le couple (m,n) compris dans l'ensemble de couples {(4,1),(10,1)}. Dit autrement, les blocs 52 et 53 sont positionnés sur les symboles $S_{4,1}$ et $S_{10,1}$ respectivement.

Les blocs de symboles pilotes supplémentaires 52 et 53, en combinaison avec les blocs 51 qui leurs sont adjacents, sont utilisés par le récepteur pour la synchronisation de trame.

A la figure 3, on a représenté les étapes principales d'un procédé de démodulation mis en oeuvre par un récepteur d'un système de radiocommunications numériques.

Dans un étape 31, le récepteur effectue une synchronisation temporelle et fréquentielle de ses circuits de traitement avec la structure de trame du signal reçu. Cette synchronisation est effectuée au moyen des blocs de symboles pilotes supplémentaires 52 et 53 en combinaison avec les blocs de symboles pilotes 51 qui leur sont adjacents suivant la direction de l'axe des fréquences, comme indiqué plus haut. La description détaillée de cette étape sortirait du cadre du présent exposé.

Dans une étape 32, et pour chaque symbole transmis, noté Sp dans la suite (où l'indice p correspond à un couple d'indices m,n pour repérer la position du symbole dans la trame), le signal reçu est corrélé avec le signal attendu, c'est-à-dire qu'on effectue une corrélation du signal reçu avec l'impulsion de modulation g(t). Cette corrélation peut être effectuée par différentes méthodes, par exemple en effectuant une multiplication par l'impulsion de modulation g(t) puis une FFT.

Le signal obtenu après cette corrélation, noté $z_p$ dans la suite et aux figures, peut s'écrire de la façon suivante :

$$z_p = \alpha_p \cdot r_p \qquad\qquad (7)$$

où $\alpha_p$ et $r_p$ sont des nombres complexes qui correspondent respectivement à la valeur du fading, et à la valeur du symbole utile affectée des interférences ayant dégradé le symbole au cours de la transmission à travers le canal de transmission.

Du fait de la propriété d'orthogonalité des symboles, le nombre $r_p$ comprend en effet le symbole utile d'origine et en outre un terme d'interférences, qui provient des interférences dues à la transmission des symboles voisins. Ces interférences sont, par construction des systèmes OFDM de densité 2, orthogonales au symbole utile d'origine.

Ainsi, si le symbole transmis $S_p$ était réel (i.e., si $c_p$ est un nombre réel égal à $a_p$), on a alors :

$$r_p = a_p + i.int_p \qquad\qquad (8)$$

où le terme $i.int_p$ représente les interférences et est un nombre imaginaire pur (c'est-à-dire que le nombre $int_p$ est un nombre réel).

A l'inverse, si le symbole transmis était imaginaire pur (i.e., si $c_p$ est un nombre imaginaire pur, égal à $i\text{-}b_p$), on a alors :

$$r_p = int_p + i.b_p \qquad\qquad (9)$$

où le terme intp représente les interférences et est un nombre réel.

Dans une étape 33, on réalise ensuite l'estimation du fading pour chacun des symboles pilotes contenus dans la trame. C'est-à-dire qu'on estime les conditions de propagation à travers le canal de transmission pour les symboles pilotes, dont l'emplacement dans la trame et la valeur sont connus à l'avance du récepteur.

Dans une étape 34, on procède alors à ce qu'on appelle la poursuite du canal. A cet effet, on effectue une ou plusieurs interpolations, à partir des valeurs estimées obtenues à l'étape 33, pour produire des valeurs estimées du fading pour les autres symboles de la trame (symboles correspondant à de l'information utile).

On obtient ainsi une valeur estimée du fading, notée $\hat{\alpha}_p$ dans la suite et aux figures, pour chaque symbole de la trame.

Enfin, dans une étape 35, on estime les symboles transmis (notamment les symboles autres que les symboles pilotes, puisque ce sont eux qui portent l'information utile), en effectuant pour chacun le calcul suivant :

$$\hat{c}_p = z_p/\hat{\alpha}_p \qquad\qquad\qquad (10)$$

L'invention concerne l'étape 33 ci-dessus, par laquelle on estime le fading pour les symboles pilotes de la trame. L'invention concerne en effet des procédés et des dispositifs d'estimation du canal.

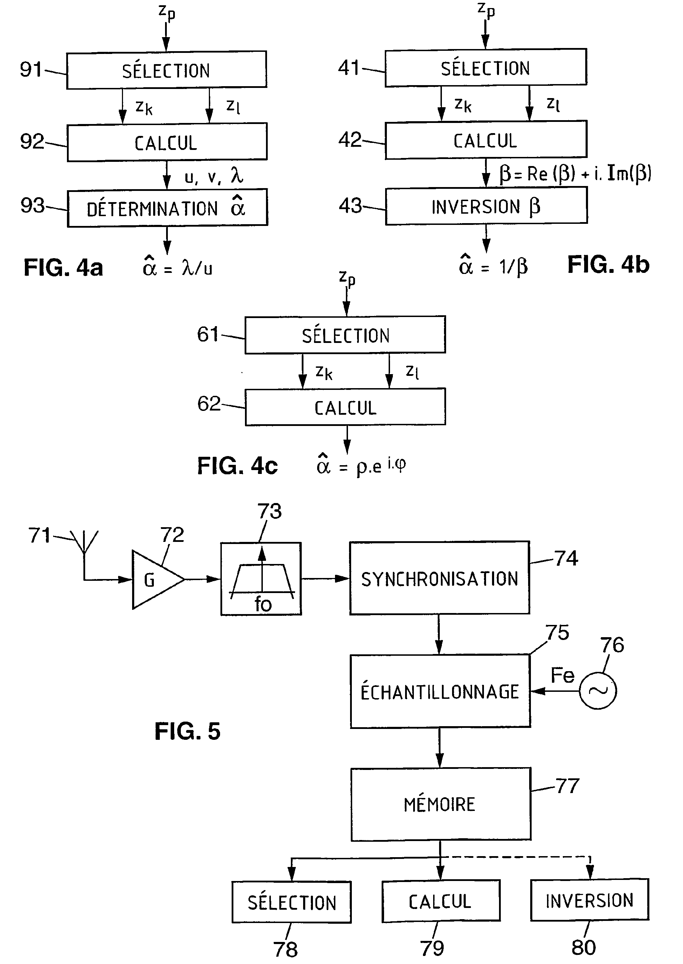

Le schéma de la figure 4a illustre les étapes d'un procédé selon un premier aspect de l'invention.

Dans une étape 91, on sélectionne d'une part K valeurs du signal reçu, où K est un nombre entier supérieur ou égal à l'unité. Par signal reçu, on entend ici le signal radio reçu par le récepteur, considéré après les étapes de synchronisation 31 et de corrélation 32. Les K valeurs ainsi sélectionnées correspondent à un ou plusieurs symboles pilotes réels $S_k$. On note $z_k$ ces K valeurs, où k est un indice entier compris entre 1 et K ($1 \leq k \leq K$) du signal reçu. De plus, on note $c_k$ les valeurs respectives des symboles pilotes réels $S_k$ transmis.

D'autre part, on sélectionne également L valeurs du signal reçu (au sens indiqué ci-dessus). Ces valeurs sont notées $z_l$, et correspondent respectivement à un ou plusieurs symboles pilotes imaginaires purs notés $S_l$, de valeurs respectives notées $c_l$, où L est un nombre entier supérieur ou égal à l'unité et où l est un indice compris entre 1 et L ($1 \leq l \leq L$).

Les symboles pilotes $S_k$ et $S_l$ ne sont pas pris au hasard. Au contraire, il s'agit de symboles pilotes qui sont suffisamment rapprochés à la fois suivant l'axe des fréquences et suivant l'axe des temps pour qu'il puisse être considéré que l'évanouissement ("fading") du signal à travers le canal de transmission a eu une valeur complexe sensiblement identique (en module et en phase) pour ces symboles pilotes. On note $\alpha$ cette valeur complexe. De plus, on note $\beta$ l'inverse de ce nombre complexe (c'est-à-dire $\beta = 1/\alpha$).

Dans une étape 92, on détermine ensuite des nombres complexes u et v et un nombre réel $\lambda$ qui minimisent l'expression aux moindres carrés suivante :

$$\varepsilon_1^2 = \sum_k \left\| Re(z_k.u) - \lambda.c_k \right\|^2 + \sum_l \left\| Re(z_l.v) - \lambda.c_l \right\|^2 \qquad\qquad (11)$$

où le signe $\Sigma$ désigne l'opérateur sommation,

où $\|x\|$ désigne l'opérateur valeur absolue de la variable réelle x ou le module de la variable complexe x,

où $\lambda$ est un nombre réel,

où u et v sont des nombres complexes orthogonaux (c'est à dire que Re(u*.v)=0, où Re(x) désigne l'opérateur partie réelle du nombre complexe x, et où x* désigne le nombre complexe conjugué du nombre complexe x), tels que $\|u\| = \|v\|$.

Par exemple, on pourra prendre v = -i·u, où i désigne la racine carrée du nombre- entier relatif -1, c'est-à-dire le nombre complexe $e^{-i\cdot\pi/2}$.

Dans une étape 93, on détermine une valeur estimée $\hat{\alpha}$ de la valeur $\alpha$ de l'évanouissement du signal à travers le canal de transmission pour les symboles pilotes concernés, c'est-à-dire pour les symboles pilotes $S_k$ et $S_l$ sélectionnés à l'étape 91, en calculant :

$$\hat{\alpha} = \lambda / u \qquad\qquad\qquad (12)$$

Cette valeur estimée $\hat{\alpha}$ vaut pour les symboles pilotes $S_k$ et $S_l$. Bien entendu, les étapes 91 à 93 sont préférentiellement répétées de manière à produire des valeurs estimées $\hat{\alpha}$ de la valeur $\alpha$ de l'évanouissement du signal à travers le canal de transmission pour tous les symboles pilotes de la trame, ou du moins pour tous ceux de ces symboles pilotes qui sont pris en compte pour effectuer la poursuite du canal (étape 34 de la figure 3).

L'expression aux moindres carrés (11) ci-dessus se comprendra mieux après la description suivante de deux modes de mise en oeuvre de l'invention, effectuée ci-dessous en regard des figures 4b et 4c, dont elle constitue la généralisation.

Un premier mode de mise en oeuvre est décrit ci-dessous en regard du diagramme d'étapes de la figure 4b.

Dans ce mode de mise en oeuvre, le procédé comprend une étape de sélection 41, qui est identique à l'étape 91 décrite plus haut, et des étapes 42 et 43, qui correspondent aux étapes respectivement 92 et 93 mentionnées plus haut.

Dans un premier temps, supposons que $K = L = 1$. Dit autrement, supposons que, à l'étape 41, on a sélectionné une seule valeur $z_1$ du signal reçu correspondant à un seul et unique symbole pilote réel $S_1$ de valeur $c_1$ d'une part, et une seule valeur $z_2$ du signal reçu correspondant à un seul et unique symbole pilote imaginaire pur $s_2$ de valeur $c_2$ d'autre part.

Pour le symbole $S_1$ de valeur $c_1$ transmis comme symbole réel, on peut noter :

$$Re(z_1.\beta) = c_1 \tag{13}$$

et, pour le symbole $S_2$ de valeur $c_2$ transmis comme symbole imaginaire pur on peut aussi noter :

$$Im(z_2.\beta) = c_2 \tag{14}$$

où $Re(x)$ désigne l'opérateur partie réelle de la variable complexe x, et
où $Im(x)$ désigne l'opérateur partie imaginaire pure de la variable complexe x.

On peut donc poser le système d'équations :

$$\begin{cases} Re(z_1.\beta) - c_1 = 0 \\ Im(z_2.\beta) - c_2 = 0 \end{cases} \tag{15}$$

Dans une étape de calcul 42, on résout le système d'équations ci-dessus, pour obtenir $Re(\beta)$ et $Im(\beta)$. On obtient ainsi le nombre complexe $\beta = Re(\beta) + i \cdot Im(\beta)$ qui est donné par :

$$\beta = \frac{c_1.z_2^* + c_2.i.z_1^*}{Re(z_1.z_2^*)} \tag{16}$$

où $z_1^*$ et $z_2^*$ désignent respectivement le nombre complexe défini par le conjugué de $z_1$ et le nombre complexe défini par le conjugué de $z_2$.

Ce calcul se généralise aux autres cas, c'est-à-dire aux cas où $(K,L) \neq (1,1)$, en affectant les indices k aux symboles pilotes (sélectionnés à l'étape 41) qui ont été transmis comme symboles pilotes réels, et les indices l aux symboles pilotes (sélectionnés à l'étape 41) qui ont été transmis comme symboles imaginaires purs.

L'étape 42 consistent alors à déterminer les nombres réels $Re(\beta)$ et $Im(\beta)$ qui minimisent l'expression aux moindres carrés suivante :

$$\varepsilon_2{}^2 = \sum_k \left\| Re(z_k.\beta) - c_k \right\|^2 + \sum_l \left\| Im(z_l.\beta) - c_l \right\|^2 \tag{17}$$

où le signe $\Sigma$ désigne l'opérateur sommation,
où $\|x\|$ désigne l'opérateur valeur absolue de la variable réelle x.

L'expression aux moindres carrés (17) correspond à l'expression aux moindres carrés (11) du cas général, en

posant que $\lambda$ est égal à l'unité, u est égal à $\beta$, et v est égal à - i·$\beta$. Dit autrement, le premier mode de mise en oeuvre du procédé conforme au diagramme d'étapes de la figure 4b, se déduit du cas général en posant que $\lambda$ est égal à l'unité, u est égal à $\beta$, et v est égal à -i·$\beta$.

Les nombres Re($\beta$) et Im($\beta$) cherchés sont ceux qui minimisent l'expression aux moindres carrés ci-dessous :

$$\varepsilon_2{}^2 = \sum_k \left\| Re(z_k).Re(\beta) - Im(z_k).Im(\beta) - c_k \right\|^2 + \sum_l \left\| Re(z_l).Im(\beta) + Im(z_l).Re(\beta) - c_l \right\|^2$$

Dans un exemple, l'étape 42 peut consister à résoudre le système de deux équations à deux inconnues suivant :

$$\begin{cases} \dfrac{\partial \varepsilon_2{}^2}{\partial Re(\beta)} = 0 \\[2mm] \dfrac{\partial \varepsilon_2{}^2}{\partial Im(\beta)} = 0 \end{cases} \tag{18}$$

On peut montrer que, en résolvant ce système d'équations, on obtient alors :

$$Re(\beta) = \frac{A \times B + C \times D}{E \times B - D} \tag{19}$$

d'une part, et

$$Im(\beta) = \frac{C \times E + A \times D}{E \times B - D} \tag{20}$$

d'autre part,
où

$$A = \sum_k c_k \cdot Re(z_k) + \sum_l c_l \cdot Im(z_l) \ ;$$

où

$$B = \sum_k Im(z_k)^2 + \sum_l Re(z_l)^2 \ ;$$

où

$$C = -\sum_k c_k \cdot Re(z_k) + \sum_l c_l \cdot Im(z_l) \ ;$$

où

$$D = \sum_{k} Re(z_k) \cdot Im(z_k) - \sum_{l} Im(z_l) \cdot Re(z_l) \ ;$$

et
où

$$E = \sum_{k} Re(z_k)^2 + \sum_{l} Im(z_l)^2 \ .$$

Le procédé permet donc de prendre en compte un nombre quelconque de symboles pilotes, et donc le cas échéant d'introduire de la diversité. Le mode de mise en oeuvre le plus simple, et donc le moins coûteux en temps de calcul, est toutefois celui où on ne sélectionne à l'étape 41 que deux symboles pilotes seulement (dont un symbole pilote réel et un symbole pilote imaginaire pur).

Dans une étape 43, on détermine enfin une valeur estimée $\hat{\alpha}$ de la valeur $\alpha$ de l'évanouissement du signal à travers le canal de transmission, en inversant le nombre complexe $Re(\beta)+i\cdot Im(\beta)$. On peut vérifier que cette étape 43 se déduit de la définition de l'étape 93 du cas général donnée plus haut, avec $\lambda$ égal à l'unité, et u égal à $\beta$.

Cette valeur estimée $\hat{\alpha}$ vaut pour les symboles pilotes $S_k$ et $S_l$. Bien entendu, les étapes 41 à 43 sont préférentiellement répétées de manière à produire des valeurs estimées $\hat{\alpha}$ de la valeur $\alpha$ de l'évanouissement du signal à travers le canal de transmission pour tous les symboles pilotes de la trame, ou du moins pour tous ceux de ces symboles pilotes qui sont pris en compte pour effectuer la poursuite du canal (étape 34 de la figure 3).

Dans un second mode de mise en oeuvre du procédé, illustré par le diagramme d'étapes de la figure 4c, on peut déterminer directement une valeur estimée $\hat{\alpha}$ de l'évanouissement du signal à travers le canal de transmission.

Ce mode de mise en oeuvre comprend une étape 61 qui est identique à l'étape 91 décrite ci-dessus, et une étape 62 qui est l'équivalent de l'étape 92 décrite ci-dessus. L'étape 62 permet néanmoins de s'affranchir de l'étape 93, qui n'a donc pas d'équivalent dans ce mode de mise en oeuvre.

Selon cette variante en effet, on effectue l'étape 92 en posant que $\lambda$ est égal à $\rho$, u est égal à $e^{-i\cdot\varphi}$, et v est égal à $-i\cdot e^{-i\cdot\varphi}$, où $\rho$ et $\varphi$ sont des nombres réels qui désignent respectivement le module et la phase de $\hat{\alpha}$ ( $\hat{\alpha} = \rho \cdot e^{i\cdot\varphi}$).

De la sorte l'étape 92 et l'étape 93 sont réalisées conjointement, dans une étape de calcul notée 62, et consistent à déterminer une valeur estimée $\hat{\alpha}$ de l'évanouissement du signal à travers le canal de transmission pour les symboles pilotes concernés, définie par $\hat{\alpha}=\rho \cdot e^{i\cdot\varphi}$ où $\rho$ et $\varphi$ minimisent l'expression aux moindres carrés suivante :

$$\varepsilon_3{}^2 = \sum_{k} \left\| Re(z_k.e^{-i\cdot\varphi}) - \rho \cdot c_k \right\|^2 + \sum_{l} \left\| Im(z_l.e^{-i\cdot\varphi}) - \rho \cdot c_l \right\|^2 \qquad (21)$$

où le signe $\Sigma$ désigne l'opérateur sommation,
où $\|x\|$ désigne l'opérateur valeur absolue de la variable réelle x
où $Re(x)$ désigne l'opérateur partie réelle de la variable complexe x, et
où $Im(x)$ désigne l'opérateur partie imaginaire pure de la variable complexe x.

Dit autrement, on détermine à l'étape 62 une valeur estimée $\hat{\alpha}$ de l'évanouissement du signal à travers le canal de transmission pour les symboles pilotes $S_k$ et $S_l$ concernés, définie en coordonnées polaires par $\hat{\alpha} = \rho \cdot e^{i\cdot\varphi}$, où $\rho$ et $\varphi$ sont des nombres réels, dont la valeur est obtenue en posant que ces nombres minimisent l'expression aux moindres carrés (21) ci-dessus.

Cette valeur estimée $\hat{\alpha}$ vaut pour les symboles pilotes $S_k$ et $S_l$. Bien entendu, les étapes 61 et 62 sont répétées de manière à produire des valeurs estimées $\hat{\alpha}$ de la valeur $\alpha$ de l'évanouissement du signal à travers le canal de transmission pour tous les symboles pilotes de la trame, ou du moins pour tous ceux de ces symboles pilotes qui sont pris en compte pour effectuer la poursuite du canal (étape 34 de la figure 3).

Dans un exemple, l'étape 62 peut consister à résoudre le système d'équations suivant :

$$\begin{cases} \dfrac{\partial \varepsilon_3^{\,2}}{\partial \rho} = 0 \\[2mm] \dfrac{\partial \varepsilon_3^{\,2}}{\partial \varphi} = 0 \end{cases} \qquad\qquad (22)$$

Par calcul matriciel, on obtient alors une expression de tg $(\varphi)$ d'une part, et de $\rho$ sous la forme d'un fonction de $\varphi$ d'autre part $(\rho = f(\varphi))$.

Dans le cas le plus simple où, à l'étape 91 on sélectionne la valeur $z_1$ du signal reçu correspondant à un seul et unique symbole pilote réel de valeur $c_1$ d'une part, et la valeur $z_2$ du signal reçu correspondant à un seul et unique symbole pilote imaginaire pur de valeur $c_2$ d'autre part, l'étape 62 comprend la résolution du système à deux équations suivant :

$$\begin{cases} \mathrm{Re}\!\left(z_1.e^{-i\cdot\varphi}\right) - \rho \cdot c_1 = 0 \\[2mm] \mathrm{Im}\!\left(z_2.e^{-i\cdot\varphi}\right) - \rho \cdot c_2 = 0 \end{cases} \qquad\qquad (23)$$

Les symboles sélectionnés à l'étape 91 (dans le cas général en regard de la figure 4a), à l'étape 41 (dans le premier mode de mise en oeuvre décrit ci-dessus en regard de la figure 4b) ou à l'étape 61 (dans le second mode de mise en oeuvre décrit ci-dessus en regard de la figure 4c), peuvent appartenir à une même et unique trame. Néanmoins, ils peuvent aussi appartenir à deux trames transmises consécutivement à travers le canal de transmission, du moment que la condition de proximité à la fois suivant la direction de l'axe fréquentiel et suivant la direction de l'axe temporel, qui a été définie ci-dessus, est respectée pour ces symboles.

Cette condition est respectée lorsque les symboles pilotes $S_k$ et $S_l$ appartiennent à un bloc de symboles pilotes au sens défini plus haut, tel que les blocs 51 de l'exemple de trame représenté à la figure 2.

De préférence, les symboles pilotes $S_k$ et $S_l$ ainsi sélectionnés appartiennent à un groupe de symboles pilotes qui sont adjacents deux à deux dans la trame, suivant la direction de l'axe des fréquences et/ou suivant la direction de l'axe des temps. C'est le cas notamment des symboles pilotes appartenant aux blocs 51 (dont les dimensions sont égales à 3x2) de l'exemple de trame représenté à la figure 2.

La figure 5 montre le schéma d'un dispositif selon l'invention, convenant pour la mise en oeuvre du procédé décrit ci-dessus en regard des figures 4a-4c. Les moyens pour l'exécution de l'étape 93 de la figure 4a ou de l'étape 43 de la figure 4b étant représentés en traits discontinus à la figure 5, dans la mesure où ces moyens du dispositif n'existent pas en tant que tels dans un dispositif pour la mise en oeuvre du procédé selon le mode de mise en oeuvre conforme au schéma de la figure 4c.

Le dispositif décrit est ici intégré dans un récepteur radio, qui comprend une antenne 71 pour recevoir le signal radio transmis à travers le canal de transmission constitué par l'air. Le signal capté par l'antenne 71 est amplifié par un amplificateur de réception 72, puis filtré par un filtre passe-bande 73 centré sur la bande de fréquence du canal radio.

Le signal ainsi amplifié et filtré est ensuite fourni en entrée d'un module de synchronisation 74 assurant la synchronisation fréquentielle et temporelle du signal.

Le signal en sortie du module 74 est transmis en entrée d'un module d'échantillonnage 75, qui reçoit une fréquence d'échantillonnage Fe délivrée par un oscillateur 76. Ce module 75 produit les valeurs $z_p$ précitées. Celles-ci sont stockées dans une mémoire 77 du récepteur.

Le dispositif selon l'invention comprend spécifiquement un module de sélection 78, qui effectue l'étape de sélection 91, 41 ou 61, à partir des valeurs $z_p$ stockées dans la mémoire 77.

Il comporte en outre un module de calcul 79, qui effectue l'étape de calcul 92, 42 ou 62 à partir des K valeurs $z_k$ et des L valeurs $z_l$ sélectionnées par le module de sélection 78. Ce module 79 délivre le nombre complexe $\beta$ dans le cas du mode de mise en oeuvre du procédé conforme à la figure 4b, ou la valeur estimée $\hat{\alpha}$ dans le cas du mode de mise en oeuvre du procédé conforme à la figure 4c.

Pour la mise en oeuvre du procédé dans le cas général conforme à la figure 4a, ou selon le mode de mise en oeuvre conforme à la figure 4b, le dispositif comporte en outre un module d'inversion 80. Dans le cas général, le module 80 inverse le nombre complexe u. Selon le mode de mise en oeuvre conforme à la figure 4b, le module 80 inverse le nombre complexe $\beta$ fourni par le module de calcul 79, pour délivrer la valeur estimée $\hat{\alpha}$.

Les modules 78, 79 et 80 accèdent à la mémoire 77. Ils peuvent être réalisés sous la forme de modules logiciels, compris les moyens de démodulation du récepteur.

**Revendications**

**1.** Procédé d'estimation d'un canal de transmission à partir d'un signal reçu après transmission à travers ledit canal de transmission, ledit signal étant un signal multiporteuses construit sur un réseau temps-fréquence défini par un axe des fréquences et un axe des temps, et comprenant des trames ayant MxN symboles répartis sur M sous-porteuses dont chacune est divisée en N temps symboles déterminés, chaque trame comprenant P symboles pilotes répartis en temps et en fréquence de manière à couvrir la trame selon une structure maillée, où les nombres M, N et P sont des nombres entiers non nuls, les symboles pilotes comprenant d'une part des symboles dits symboles pilotes réels, transmis comme des symboles ayant une valeur réelle, et d'autre part des symboles dits symboles pilotes imaginaires purs, transmis comme des symboles ayant une valeur imaginaire pure, le procédé comprenant les étapes consistant à :

a) sélectionner (91) une ou plusieurs valeurs $z_k$ du signal reçu correspondant à un ou plusieurs symboles pilotes réels de valeurs respectives $c_k$ d'une part, et une ou plusieurs valeurs $z_l$ du signal reçu correspondant respectivement à un ou plusieurs symboles pilotes imaginaires purs de valeurs respectives $c_l$ d'autre part, ces symboles pilotes étant suffisamment rapprochés à la fois suivant l'axe des fréquences et suivant l'axe des temps pour qu'il puisse être considéré que l'évanouissement du signal à travers le canal de transmission a eu une valeur complexe $\alpha$ sensiblement identique en module et en phase pour ces symboles pilotes;

b) déterminer (92) des nombres complexes u et v et un nombre réel $\lambda$ en minimisant l'expression aux moindres carrés suivante :

$$\varepsilon_1{}^2 = \sum_k \left\| \mathrm{Re}(z_k.u) - \lambda.c_k \right\|^2 + \sum_l \left\| \mathrm{Re}(z_l.v) - \lambda.c_l \right\|^2$$

où le signe $\Sigma$ désigne l'opérateur sommation,
où $\|x\|$ désigne l'opérateur valeur absolue de la variable réelle x ou le module de la variable complexe x,
où $\lambda$ est un nombre réel, K, L = indice entier compris entre 1 et K, ou 1 et L, K, L = nombre entier supérieur ou égal à l'unité,
où u et v sont des nombres complexes orthogonaux Re(u*.v)=0, où Re(w) désigne l'opérateur partie réelle du nombre complexe w, et où w* désigne le nombre complexe conjugué du nombre complexe w, tels que $\|u\|=\|v\|$.
c) déterminer (93) une valeur estimée $\hat{\alpha}$ de la valeur $\alpha$ de l'évanouissement du signal à travers le canal de transmission pour les symboles pilotes concernés, en calculant : $\hat{\alpha} = \lambda/u$.

**2.** Procédé d'estimation d'un canal de transmission selon la revendication 1, suivant lequel $\lambda$ est égal à l'unité, u est égal à $\beta$, et v est égal à - i·$\beta$, où $\beta$ désigne l'inverse de $\alpha$,
en sorte que l'étape b) consiste à déterminer (42) des nombres réels Re($\beta$) et Im($\beta$) en minimisant l'expression aux moindres carrés suivante :

$$\varepsilon_2{}^2 = \sum_k \left\| \mathrm{Re}(z_k.\beta) - c_k \right\|^2 + \sum_l \left\| \mathrm{Im}(z_l.\beta) - c_l \right\|^2$$

où le signe $\Sigma$ désigne l'opérateur sommation,
où $\|x\|$ désigne l'opérateur valeur absolue de la variable réelle x
où Re(x) désigne l'opérateur partie réelle de la variable complexe x, et
où Im(x) désigne l'opérateur partie imaginaire de la variable complexe x,;
et en sorte que l'étape c) consiste à déterminer (43) la valeur estimée $\hat{\alpha}$ de la valeur $\alpha$ de l'évanouissement du signal à travers le canal de transmission pour les symboles pilotes concernés, en inversant le nombre complexe Re($\beta$)+i·Im($\beta$).

**3.** Procédé selon la revendication 2, suivant lequel l'étape b) comprend la résolution du système de deux équations à deux inconnues suivant :

$$\begin{cases} \dfrac{\partial \varepsilon_2{}^2}{\partial \mathrm{Re}(\beta)} = 0 \\[2ex] \dfrac{\partial \varepsilon_2{}^2}{\partial \mathrm{Im}(\beta)} = 0 \end{cases}$$

4. Procédé selon la revendication 2, suivant lequel l'étape a) comprend la sélection de la valeur $z_1$ du signal reçu correspondant à un seul et unique symbole pilote réel de valeur $c_1$ d'une part, et de la valeur $z_2$ du signal reçu correspondant à un seul et unique symbole pilote imaginaire pur de valeur $c_2$ d'autre part,
et suivant lequel l'étape b) comprend la résolution du système d'équations à deux inconnues suivant :

$$\begin{cases} \mathrm{Re}(z_1.\beta) - c_1 = 0 \\[1ex] \mathrm{Im}(z_2.\beta) - c_2 = 0 \end{cases}$$

5. Procédé selon la revendication 1, suivant lequel $\lambda$ est égal à $\rho$, u est égal à $e^{-i\cdot\varphi}$, et v est égal à $-i\cdot e^{-i\cdot\varphi}$, où $\rho$ et $\varphi$ sont des nombres réels qui désignent respectivement le module et la phase de $\hat{\alpha}$ ( $\hat{\alpha} = \rho\cdot e^{i\cdot\varphi}$),
en sorte que l'étape b) et l'étape c) sont réalisées conjointement et consistent à déterminer (62) une valeur estimée $\hat{\alpha}$ de l'évanouissement du signal à travers le canal de transmission pour les symboles pilotes concernés, définie par $\hat{\alpha} = \rho\cdot e^{i\cdot\varphi}$ où $\rho$ et $\varphi$ minimisent l'expression aux moindres carrés suivante :

$$\varepsilon_3{}^2 = \sum_k \left\| \mathrm{Re}(z_k.e^{-i\cdot\varphi}) - \rho\cdot c_k \right\|^2 + \sum_l \left\| \mathrm{Im}(z_l.e^{-i\cdot\varphi}) - \rho\cdot c_l \right\|^2$$

où le signe $\Sigma$ désigne l'opérateur sommation,
où $\|x\|$ désigne l'opérateur valeur absolue de la variable réelle x
où Re(x) désigne l'opérateur partie réelle de la variable complexe x, et
où lm(x) désigne l'opérateur partie imaginaire pure de la variable complexe x.

6. Procédé selon la revendication 5, suivant lequel l'étape b) comprend la résolution du système de deux équations à deux inconnues suivant :

$$\begin{cases} \dfrac{\partial \varepsilon_3{}^2}{\partial \rho} = 0 \\[2ex] \dfrac{\partial \varepsilon_3{}^2}{\partial \varphi} = 0 \end{cases}$$

7. Procédé selon la revendication 5, suivant lequel l'étape a) comprend la sélection de la valeur $z_1$ du signal reçu correspondant à un seul et unique symbole pilote réel de valeur $c_1$ d'une part, et de la valeur $z_2$ du signal reçu correspondant à un seul et unique symbole pilote imaginaire pur de valeur $c_2$ d'autre part,
et suivant lequel l'étape b) comprend la résolution du système d'équations à deux inconnues suivant :

$$\begin{cases} \mathrm{Re}\left(z_1.e^{-i\cdot\varphi}\right) - \rho\cdot c_1 = 0 \\ \mathrm{Im}\left(z_2.e^{-i\cdot\varphi}\right) - \rho\cdot c_2 = 0 \end{cases}$$

**8.** Procédé selon l'une quelconque des revendications 1 à 7, suivant lequel les symboles sélectionnés à l'étape a) appartiennent à une même et unique trame.

**9.** Procédé selon l'une quelconque des revendications 1 à 7, suivant lequel les symboles sélectionnés à l'étape a) appartiennent à deux trames transmises consécutivement à travers le canal de transmission.

**10.** Procédé selon l'une quelconque des revendications 1à9, suivant lequel les symboles sélectionnés à l'étape a) appartiennent à un groupe de symboles pilotes qui sont adjacents deux à deux dans la trame, suivant la direction de l'axe des fréquences et/ou suivant la direction de l'axe des temps.

**11.** Dispositif pour la mise en oeuvre d'un procédé selon l'une quelconque des revendications 1 à 10, comprenant :

- des moyens (78) pour sélectionner une ou plusieurs valeurs $z_k$ du signal reçu correspondant à un ou plusieurs symboles pilotes réels de valeurs respectives $c_k$ d'une part, et une ou plusieurs valeurs $z_l$ du signal reçu correspondant respectivement à un ou plusieurs symboles pilotes imaginaires purs de valeurs respectives $c_l$ d'autre part, ces symboles pilotes étant suffisamment rapprochés à la fois suivant l'axe des fréquences et suivant l'axe des temps pour qu'il puisse être considéré que l'évanouissement du signal à travers le canal de transmission a eu une valeur complexe $\alpha$ sensiblement identique pour ces symboles pilotes ;
- des moyens (79) pour déterminer des nombres complexes u et v et un nombre réel $\lambda$ minimisant l'expression aux moindres carrés suivante :

$$\varepsilon_1{}^2 = \sum_k \left\| \mathrm{Re}(z_k.u) - \lambda.c_k \right\|^2 + \sum_l \left\| \mathrm{Re}(z_l.v) - \lambda.c_l \right\|^2$$

où le signe $\Sigma$ désigne l'opérateur sommation,
où $\|x\|$ désigne l'opérateur valeur absolue de la variable réelle x ou le module de la variable complexe x,
où $\lambda$ est un nombre réel,
K, L =indice entier compris entre 1 et K, ou 1 et L
K, L = nombre entier supérieur ou égal à l'unité,
où u et v sont des nombres complexes orthogonaux, Re(u*.v)=0, où Re(w) désigne l'opérateur partie réelle du nombre complexe w, et où w* désigne le nombre complexe conjugué du nombre complexe w, tels que $\|u\|=\|v\|$.

- des moyens (80) pour déterminer une valeur estimée $\hat{\alpha}$ de la valeur $\alpha$ de l'évanouissement du signal à travers le canal de transmission pour les symboles pilotes concernés, en calculant : $\hat{\alpha} = \lambda/u$.

**12.** Dispositif pour la mise en oeuvre d'un procédé selon l'une quelconque des revendications 2 à 4, comprenant

- des moyens pour sélectionner une ou plusieurs valeurs $z_k$ du signal reçu correspondant à un ou plusieurs symboles pilotes réels de valeurs respectives $c_k$ d'une part, et une ou plusieurs valeurs $z_l$ du signal reçu correspondant respectivement à un ou plusieurs symboles pilotes imaginaires purs de valeurs respectives $c_l$ d'autre part, ces symboles pilotes étant suffisamment rapprochés à la fois suivant l'axe des fréquences et suivant l'axe des temps pour qu'il puisse être considéré que l'évanouissement du signal à travers le canal de transmission a eu une valeur complexe $\alpha$ sensiblement identique pour ces symboles pilotes ;
- des moyens pour déterminer des nombres réels Re($\beta$) et Im($\beta$) minimisant l'expression aux moindres carrés suivante :

$$\varepsilon_2{}^2 = \sum_k \left\| \mathrm{Re}(z_k.\beta) - c_k \right\|^2 + \sum_l \left\| \mathrm{Im}(z_l.\beta) - c_l \right\|^2$$

où le signe Σ désigne l'opérateur sommation,

où ‖x‖ désigne l'opérateur valeur absolue de la variable réelle x

où Re(x) désigne l'opérateur partie réelle de la variable complexe x,

où lm(x) désigne l'opérateur partie imaginaire pure de la variable complexe x, et

où β désigne l'inverse de α ; et,

- des moyens pour déterminer une valeur estimée $\hat{\alpha}$ de l'évanouissement du signal à travers le canal de transmission pour les symboles pilotes concernés, en inversant le nombre complexe Re(β)+i·lm(β).

13. Dispositif pour la mise en oeuvre d'un procédé selon l'une quelconque des revendications 5 à 7, comprenant :

- des moyens pour sélectionner une ou plusieurs valeurs $z_k$ du signal reçu correspondant à un ou plusieurs symboles pilotes réels de valeurs respectives $c_k$ d'une part, et une ou plusieurs valeurs $z_l$ du signal reçu correspondant respectivement à un ou plusieurs symboles pilotes imaginaires purs de valeurs respectives $c_l$ d'autre part, ces symboles pilotes étant suffisamment rapprochés à la fois suivant l'axe des fréquences et suivant l'axe des temps pour qu'il puisse être considéré que l'évanouissement du signal à travers le canal de transmission a eu une valeur complexe α sensiblement identique pour ces symboles pilotes ; et,

- des moyens pour déterminer une valeur estimée $\hat{\alpha}$ de l'évanouissement du signal à travers le canal de transmission pour les symboles pilotes concernés, définie par $\hat{\alpha} = \rho \cdot e^{i \cdot \varphi}$ où ρ et φ sont des nombres réels qui minimisent l'expression aux moindres carrés suivante :

$$\varepsilon_3{}^2 = \sum_k \left\| Re(z_k.e^{-i\cdot\varphi}) - \rho \cdot c_k \right\|^2 + \sum_l \left\| Im(z_l.e^{-i\cdot\varphi}) - \rho \cdot c_l \right\|^2$$

où le signe Σ désigne l'opérateur sommation,

où ‖x‖ désigne l'opérateur valeur absolue de la variable réelle x

où Re(x) désigne l'opérateur partie réelle de la variable complexe x, et

où lm(x) désigne l'opérateur partie imaginaire pure de la variable complexe x.

## Claims

1. A method of estimating a transmission channel on the basis of a signal received after transmission through said transmission channel, said signal being a multicarrier signal constructed on a time/frequency lattice defined by a frequency axis and a time axis, and comprising frames having MxN symbols distributed over M subcarriers each of which is divided into N determined symbol times, each frame comprising P pilot symbols distributed timewise and frequencywise in such a way as to cover the frame according to a lattice structure, where the numbers M, N and P are nonzero Integers, the pilot symbols comprising on the one hand symbols known as real pilot symbols, transmitted as symbols having a real value, and on the other hand symbols known as pure imaginary pilot symbols, transmitted as symbols having a pure imaginary value, the method comprising the steps of:

a) selecting (91) one or more values $z_k$ of the signal received corresponding to one or more real pilot symbols of respective values $c_k$ on the one hand, and one or more values $z_1$ of the signal received corresponding respectively to one or more pure imaginary pilot symbols of respective values $c_1$ on the other hand, these pilot symbols being sufficiently close together both along the frequency axis and along the time axis for it to be possible to consider that the fading of the signal through the transmission channel has had a substantially identical in modulus and in phase complex value for these pilot symbols;

b) determining (92) complex numbers u and v and a real number λ by minimizing the following least squares expression:

$$\varepsilon_1{}^2 = \sum_k \left\| Re(z_k.u) - \lambda.c_k \right\|^2 + \sum_1 \left\| Re(z_1.v) - \lambda.c_1 \right\|^2$$

where the sign Σ denotes the summation operator,

where ‖x‖ denotes the absolute value operator for the real variable x or the modulus of the complex variable x,

where λ is a real number,

$k_j l$ = integer index laying between 1, and K, or 1 and L,

K, L = integer greater than or equal to unity,

where u and v are orthogonal Re (u*.v) = 0, where Re(w) denotes the real part operator for the complex number w, and where w* denotes the complex conjugate of the complex number w, such that $\|u\| = \|v\|$,

c) determining (93) an estimated value $\hat{\alpha}$ of the value $\alpha$ of the fading of the signal through the transmission channel for the pilot symbols concerned, by calculating: $\hat{\alpha} = \lambda/u$.

2. The method of estimating a transmission channel as claimed in claim 1, wherein $\lambda$ is equal to unity, u is equal to $\beta$, and v is equal to $-i \cdot \beta$, where $\beta$ denotes the inverse of $\alpha$,

so that step b) consists in determining (42) real numbers $Re(\beta)$ and $Im(\beta)$ by minimizing the following least squares expression:

$$\varepsilon_2{}^2 = \sum_k \left\| Re(z_k \cdot \beta) - c_k \right\|^2 + \sum_l \left\| Im(z_l \cdot \beta) - c_l \right\|^2$$

where the sign $\Sigma$ denotes the summation operator,

where $\|x\|$ denotes the absolute value operator for the real variable x

where Re(x) denotes the real part operator for the complex variable x, and

where Im(x) denotes the imaginary part operator for the complex variable x,

and so that step c) consists in determining (43) the estimated value $\hat{\alpha}$ of the value $\alpha$ of the fading of the signal through the transmission channel for the pilot symbols concerned, by inverting the complex number $Re(\beta) + i \cdot Im(\beta)$.

3. The method as claimed in claim 2, wherein step b) comprises the solving of the following system of two equations in two unknowns:

$$\begin{cases} \dfrac{\partial \varepsilon_2{}^2}{\partial Re(\beta)} = 0 \\ \dfrac{\partial \varepsilon_2{}^2}{\partial Im(\beta)} = 0 \end{cases}$$

4. The method as claimed in claim 2, wherein step a) comprises the selection of the value $z_1$ of the signal received corresponding to one and only one real pilot symbol of value $c_1$ on the one hand, and of the value $z_2$ of the signal received corresponding to one and only one pure imaginary pilot symbol of value $c_2$ on the other hand,

and wherein step b) comprises the solving of the following system of equations in two unknowns:

$$\begin{cases} Re(z_1 \cdot \beta) - c_1 = 0 \\ Im(z_2 \cdot \beta) - c_2 = 0 \end{cases}$$

5. The method as claimed in claim 1, wherein $\lambda$ is equal to $\rho$, u is equal to $e^{i \cdot \varphi}$, and v is equal to $-i \cdot e^{1 \cdot \varphi}$, where $\rho$ and $\varphi$ are real numbers that respectively denote the modulus and the phase of $\hat{\alpha}$ ( $\hat{\alpha} = \rho \cdot e^{i \cdot \varphi}$),

so that step b) and step c) are carried out jointly and consist in determining (62) an estimated value $\hat{\alpha}$ of the fading of the signal through the transmission channel for the pilot symbols concerned, which value is defined by $\hat{\alpha} = \rho \cdot e^{i \cdot \varphi}$ where $\rho$ and $\varphi$ minimize the following least squares expression:

$$\varepsilon_3{}^2 = \sum_k \left\| Re\left(z_k \cdot e^{-i \cdot \varphi}\right) - \rho \cdot c_k \right\|^2 + \sum_l \left\| Im\left(z_l \cdot e^{-i \cdot \varphi}\right) - \rho \cdot c_l \right\|^2$$

where the sign $\Sigma$ denotes the summation operator,

where $\|x\|$ denotes the absolute value operator for the real variable x,

where Re(x) denotes the real part operator for the complex variable x, and

where Im(x) denotes the pure imaginary part operator for the complex variable x.

6. The method as claimed in claim 5, wherein step b) comprises the solving of the following system of two equations in two unknowns:

$$\begin{cases} \dfrac{\partial \varepsilon_1{}^2}{\partial \rho} = 0 \\[2mm] \dfrac{\partial \varepsilon_1{}^2}{\partial \varphi} = 0 \end{cases}$$

**7.** The method as claimed in claim 5, wherein step a) comprises the selection of the value $z_1$ of the signal received corresponding to one and only one real pilot symbol of value $c_1$ on the one hand, and of the value $z_2$ of the signal received corresponding to one and only one pure imaginary pilot symbol of value $c_2$ on the other hand, and wherein step b) comprises the solving of the following system of equations in two unknowns:

$$\begin{cases} \mathrm{Re}\!\left(z_1.e^{-i\cdot\varphi}\right) - \rho \cdot c_1 = 0 \\ \mathrm{Im}\!\left(z_2.e^{-i\cdot\varphi}\right) - \rho \cdot c_2 = 0 \end{cases}$$

**8.** The method as claimed in any one of claims 1 to 7, wherein the symbols selected in step a) belong to one and the same single frame.

**9.** The method as claimed in any one of claims 1 to 7, wherein the symbols selected in step a) belong to two frames transmitted consecutively through the transmission channel.

**10.** The method as claimed in any one of claims 1 to 9, wherein the symbols selected in step a) belong to a group of pilot symbole that are pairwise adjacent in the frame, in the direction of the frequency axis and/or in the direction of the time axis.

**11.** A device for the implementation of a method as claimed in any one of claims 1 to 10, comprising:

- means (78) for selecting one or more values $z_k$ of the signal received corresponding to one or more real pilot symbols of respective values $c_k$ on the one hand, and one or more values $z_1$ of the signal received corresponding respectively to one or more pure imaginary pilot symbols of respective values $c_1$ on the other hand, these pilot symbols being sufficiently close together both along the frequency axis and along the time axis for it to be possible to consider that the fading of the signal through the transmission channel has had a substantially identical complex value $\alpha$ for these pilot symbols;
- means (79) for determining complex numbers u and v and a real number $\lambda$ minimizing the following least squares expression:

$$\varepsilon_1{}^2 = \sum_k \left\| \mathrm{Re}\!\left(z_k.u\right) - \lambda.c_k \right\|^2 + \sum_l \left\| \mathrm{Re}\!\left(z_1.v\right) - \lambda.c_1 \right\|^2$$

where the sign $\Sigma$ denotes the summation operator,
where $\|x\|$ denotes the absolute value operator for the real variable x or the modulus of the complex variable x,
where $\lambda$ ie a real number,
$k$, $l$ = integer index laying between 1 and K, or 1 and $L_l$,
K, L = integer greater than or equal to unity,
where u and v are orthogonal $\mathrm{Re}(u^*.v) = 0$, where $\mathrm{Re}(w)$ denotes the real part operator for the complex number w, and where $w^*$ denotes the complex conjugate of the complex number w, such that $\|u\| = \|v\|$,
- means (80) for determining an estimated value $\hat{\alpha}$ of the value $\alpha$ of the fading of the signal through the transmission channel for the pilot symbols concerned, by calculating: $\hat{\alpha} = \lambda/u$.

**12.** A device for the implementation of a method as claimed in any one of claims 2 to 4, comprising:

- means for selecting one or more values $z_k$ of the signal received corresponding to one or more real pilot symbols of respective values $c_k$ on the one hand, and one or more values $z_l$ of the signal received corresponding respectively to one or more pure imaginary pilot symbols of respective values $c_l$ on the other hand, these pilot,

symbols being sufficiently close together both along the frequency axis and along the time axis for it to be possible to consider that the fading of the signal through the transmission channel has had a substantially identical complex value $\alpha$ for these pilot symbols ;

- means for determining real numbers Re $(\beta)$ and Im $(\beta)$ minimizing the following least squares expression:

$$\varepsilon_2{}^2 = \sum_k \left\| Re(z_k.\beta) - c_k \right\|^2 + \sum_l \left\| Im(z_l.\beta) - c_l \right\|^2$$

where the sign $\Sigma$ denotes the summation operator,
where $\|x\|$ denotes the absolute value operator for the real variable x
where Re(x) denotes the real part operator for the complex variable x,
where Im (x) denotes the pure imaginary part operator for the complex variable x, and
where $\beta$ denotes the inverse of $\alpha$; and,
- means for determining an estimated value $\hat{\alpha}$ of the fading of the signal through the transmission channel for the pilot symbols concerned, by inverting the complex number Re $(\beta)$ +i·Im$(\beta)$.

**13.** A device for the implementation of a method as claimed in any one of claims 5 to 7, comprising:

- means for selecting one or more values $z_k$ of the signal received corresponding to one or more real pilot symbols of respective values $c_k$ on the one hand, and one or more values $z_l$ of the signal received corresponding respectively to one or more pure imaginary pilot symbols of respective values $c_l$ on the other hand, these pilot symbols being sufficiently close together both along the frequency axis and along the time axis for it to be possible to consider that the fading of the signal through the transmission channel has had a substantially identical complex value $\alpha$ for these pilot symbols; and
- means for determining an estimated value $\hat{\alpha}$ of the fading of the signal through the transmission channel for the pilot symbols concerned, which value is defined by $\hat{\alpha} = \rho \cdot e^{i \cdot \varphi}$ where $\rho$ and $\varphi$ are real numbers which minimize the following least squares expression:

$$\varepsilon_3{}^2 = \sum_k \left\| Re\left(z_k.e^{-i\cdot\varphi}\right) - \rho \cdot c_k \right\|^2 + \sum_l \left\| Im\left(z_l.e^{-i\cdot\varphi}\right) - \rho \cdot c_l \right\|^2$$

where the sign $\Sigma$ denotes the summation operator,
where $\|x\|$ denotes the absolute value operator for the real variable x
where Re(x) denotes the real part operator for the complex variable x, and
where Im(x) denotes the pure imaginary part operator for the complex variable x.

**Patentansprüche**

**1.** Verfahren zum Schätzen eines Übertragungskanals anhand eines nach Übertragung über den Übertragungskanal empfangenen Signals, wobei das Signal ein Mehrträgersignal ist, das auf einem durch eine Frequenz-Achse und eine Zelt-Achse definierten Zelt-Frequenz-Netz aufgebaut Ist, und Datenblöcke mit MxN Symbolen, verteilt auf M Subträgern, umfasst, von denen jeder In N bestimmte Zeitsymbole untertellt Ist, wobei jeder Datenblock P Pilotsymbole umfasst, die über die Zeit und die Frequenz derart verteilt sind, dass der Datenblock gemäß einer vermaschten Struktur erfasst Ist, wobei die Zahlen M, N und P ganze Zahlen ungleich Null sind, wobei die Pilotsymbole einerseits so genannte reelle Pilotsymbole, die als Symbole mit einem reellen Wert übertragen werden, und andererseits so genannte rein Imaginäre Pilotsymbole, die als Symbole mit rein imaginärem Wert übertragen werden, umfassen, wobei das Verfahren die folgenden Schritte umfasst:

a) Auswählen (91) einerseits eines oder mehrerer Werte $z_k$ des empfangenen Signals, das einem oder mehreren reellen Pilotsymbolen jeweils mit Werten $c_k$ entspricht, und andererseits eines oder mehrerer Werte $z_l$ des empfangenen Signals, das einem bzw. mehreren rein Imaginären Pilotsymbolen jeweils mit Werten $c_l$ entspricht, wobei die Pilotsymbole sowohl entlang der Frequenzachse als auch entlang der Zeitachse ausreichend angenähert sind, um beurteilen zu können, ob der Signalschwund über den Übertragungskanal einen für die Pilotsymbole Im Modul und In der Phase im Wesentlichen Identischen komplexen Wert $\alpha$ gehabt hat;
b) Bestimmen (92) der komplexen Zahlen u und v und einer reellen Zahl $\lambda$ durch Minimieren des folgenden Ausdrucks mit kleinsten Fehlerquadraten:

$$\varepsilon_1^2 = \sum_k \left\| Re(z_k \cdot u) - \lambda \cdot c_k \right\|^2 + \sum_l \left\| Re(z_l \cdot v) - \lambda \cdot c_l \right\|^2$$

wobei das Zeichen Σ den Summen-Operator bezeichnet,
wobei $\|x\|$ den Absolutwert-Operator der reellen Variablen x oder das Modul der komplexen Variablen x bezeichnet,
wobei λ eine reelle Zahl Ist,
k, l ein ganzer Index zwischen 1 und K oder 1, und L ist,
K, L eine ganze Zahl größer oder gleich dem neutralen Element Ist,
wobei u und v orthogonale komplexe Zahlen sind, Re(u*.v)=0, wobei Re(w) den Realtell-Operator der komplexen Zahl w bezeichnet, und wobei w* die konjugierte komplexe Zahl der komplexen Zahl w bezeichnet, wie zum Beispiel $\|u\|=\|v\|$;
c) Bestimmen (93) eines geschätzten Wertes $\hat{\alpha}$ des Wertes α des Signalschwunds über den Übertragungskanal für die betreffenden Pilotsymbole, durch Berechnen von: $\hat{\alpha} = \lambda/u$.

2. Verfahren zum Schätzen eines Übertragungskanals nach Anspruch 1,
dem zufolge λ gleich dem neutralen Element ist, u gleich β ist und v gleich -l.β ist, wobei β den Kehrwert von α bezeichnet,
derart, dass Schritt b) darin besteht, reelle Zahlen Re(β) und Im(β) durch Minimieren des folgenden Ausdrucks mit kleinsten Fehlerquadraten zu bestimmen (42):

$$\varepsilon_2^2 = \sum_k \left\| Re(z_k \cdot \beta) - c_k \right\|^2 + \sum_l \left\| Im(z_l \cdot \beta) - c_l \right\|^2$$

wobei das Zeichen Σ den Summen-Operator bezeichnet,
wobei $\|x\|$ den Absolutwert-Operator der reellen Variablen x bezeichnet,
wobei Re(x) den Realteil-Operator der komplexen Variablen x bezeichnet, und
wobei Im(x) den Imaginärteil-Operator der komplexen Variablen x bezeichnet;
und derart, dass der Schritt c) darin besteht, den geschätzten Wert $\overline{\alpha}$ des Wertes α des Signalschwunds über den Übertragungskanal für die betreffenden Pilotsymbole durch Umkehren der komplexen Zahl Re(β)+i.Im(β) zu bestimmen (43).

3. Verfahren nach Anspruch 2,
dem zufolge Schritt b) die Lösung des folgenden Systems von zwei Gleichungen mit zwei Unbekannten umfasst:

$$\begin{cases} \dfrac{\partial \varepsilon_2^2}{\partial Re(\beta)} = 0 \\[2ex] \dfrac{\partial \varepsilon_2^2}{\partial Im(\beta)} = 0 \end{cases}$$

4. Verfahren nach Anspruch 2,
dem zufolge Schritt a) die Auswahl einerseits des Wertes $z_1$ des empfangenen Signals, das einem einzigen reellen Pilotsymbol mit Wert $c_1$ entspricht, und andererseits des Wertes $z_2$ des empfangenen Signals, das einem einzigen rein Imaginären Pilotsymbol mit Wert $c_2$ entspricht, umfasst,
und dem zufolge Schritt b) die Lösung des folgenden Systems von Gleichungen mit zwei Unbekannten umfasst:

$$\begin{cases} Re(z_1 \cdot \beta) - c_1 = 0 \\ Im(z_2 \cdot \beta) - c_2 = 0 \end{cases}$$

5. Verfahren nach Anspruch 1,
dem zufolge λ gleich ρ ist, u gleich $e^{-l.\varphi}$ ist und v gleich $-l.e^{-i.\varphi}$ Ist, wobei ρ und φ reelle Zahlen sind, die das Modul bzw. die Phase von $\hat{\alpha}$ bezeichnen (ä = $\rho \cdot e^{i \cdot \varphi}$),
derart, dass Schritt b) und Schritt c) gemeinsam ausgeführt werden und darin bestehen, einen geschätzten Wert

$\hat{\alpha}$ des Signalschwunds über den Übertragungskanal für die betreffenden Pilotsymbole zu bestimmen (62), der definiert ist durch $\ddot{\alpha} = \rho \cdot e^{i \cdot \varphi}$, wobei $\rho$ und $\varphi$ reelle Zahlen sind, die den folgenden Ausdruck mit kleinsten Fehlerquadraten minimieren:

$$\varepsilon_3^2 = \sum_k \left\| \text{Re}\left(z_k \cdot e^{-i \cdot \varphi}\right) - \rho \cdot c_k \right\|^2 + \sum_j \left\| Im\left(z_l \cdot e^{-i \cdot \varphi}\right) - \rho \cdot c_l \right\|^2$$

wobei das Zeichen $\Sigma$ den Summen-Operator bezeichnet,
wobei $\|x\|$ den Absolutwert-Operator der reellen Variablen x bezeichnet,
wobei Re(x) den Realteil-Operator der komplexen Variablen x bezeichnet, und
wobei Im(x) den reinen Imaginärteil-Operator der komplexen Variablen x bezeichnet.

**6.** Verfahren nach Anspruch 5,
dem zufolge Schritt b) die Lösung des folgenden Systems von zwei Gleichungen mit zwei Unbekannten umfasst:

$$\begin{cases} \dfrac{\partial \varepsilon_3^2}{\partial \rho} = 0 \\[2mm] \dfrac{\partial \varepsilon_3^2}{\partial \varphi} = 0 \end{cases}$$

**7.** Verfahren nach Anspruch 5,
dem zufolge Schritt a) die Auswahl einerseits des Wertes $z_1$ des empfangenen Signals, das einem einzigen reellen Pilotsymbol mit Wert $c_1$ entspricht, und andererseits des Wertes $z_2$ des empfangenen Signals, das einem einzigen rein Imaginären Pilotsymbol mit Wert $c_2$ entspricht, umfasst,
und dem zufolge Schritt b) die Lösung des folgenden Systems von Gleichungen mit zwei Unbekannten umfasst:

$$\begin{cases} \text{Re}\left(z_1 \cdot e^{-i \cdot \varphi}\right) - \rho \cdot c_1 = 0 \\[2mm] Im\left(z_2 \cdot e^{-i \cdot \varphi}\right) - \rho \cdot c_2 = 0 \end{cases}$$

**8.** Verfahren nach einem der Ansprüche 1 bis 7,
dem zufolge die In Schritt a) ausgewählten Symbole ein und dem selben Datenblock angehören.

**9.** Verfahren nach einem der Ansprüche 1 bis 7,
dem zufolge die In Schritt a) ausgewählten Symbole zwei nachelnander über den Übertragungskanal übertragenen Datenblöcken angehören.

**10.** Verfahren nach einem der Ansprüche 1 bis 9,
dem zufolge die In Schritt a) ausgewählten Symbole einer Gruppe Pilotsymbolen angehören, die in dem Datenblock in Richtung der Frequenzachse und/oder in Richtung der Zeitachse paarweise nebeneinanderliegen.

**11.** Vorrichtung zur Durchführung eines Verfahrens nach einem der Ansprüche 1 bis 10, mit:

- Mitteln (78) zum Auswählen einerseits eines oder mehrerer Werte $z_k$ des empfangenen Signals, das einem oder mehreren reellen Pilotsymbolen jeweils mit Werten $c_k$ entspricht, und andererseits eines oder mehrerer Werte $z_l$ des empfangenen Signals, das einem bzw. mehreren rein imaginären Pilotsymbolen jeweils mit Werten $c_l$ entspricht, wobei die Pilotsymbole sowohl entlang der Frequenzachse als auch entlang der Zeitachse ausreichend angenähert sind, um beurteilen zu können, ob der Signalschwund über den Übertragungskanal einen für die Pilotsymbole Im Wesentlichen Identischen komplexen Wert $\alpha$ gehabt hat;
- Mitteln (79) zum Bestimmen der komplexen Zahlen u und v und einer reellen Zahl $\lambda$ durch Minimieren des folgenden Ausdrucks mit kleinsten Fehlerquadraten:

$$\varepsilon_1^2 = \sum_k \left\| \text{Re}\left(z_k \cdot u\right) - \lambda \cdot c_k \right\|^2 + \sum_j \left\| \text{Re}\left(z_l \cdot v\right) - \lambda \cdot c_l \right\|^2$$

wobei das Zeichen $\Sigma$ den Summen-Operator bezeichnet,

wobei ‖x‖ den Absolutwert-Operator der reellen Variablen x oder das Modul der komplexen Variablen x bezeichnet,

wobei $\lambda$ eine reelle Zahl Ist,

k, l ein ganzer Index zwischen 1 und K oder 1 und L ist,

K, L eine ganze Zahl größer oder gleich dem neutralen Element ist,

wobei u und v orthogonale komplexe Zahlen sind, Re(u*.v)=0, wobei Re(w) den Realtell-Operator der komplexen Zahl w bezeichnet und wobei w* die konjugierte komplexe Zahl der komplexen Zahl w bezeichnet, wie zum Beispiel ‖u‖ = ‖v‖;

- Mitteln (80) zum Bestimmen eines geschätzten Wertes $\ddot{\alpha}$ des Wertes $\alpha$ des Signalschwunds über den Übertragungskanal für die betreffenden Pilotsymbole, durch Berechnen von: $\ddot{\alpha} = \lambda/u$.

**12.** Vorrichtung zur Durchführung eines Verfahrens nach einem der Ansprüche 2 bis 4, mit:

- Mitteln zum Auswählen einerseits eines oder mehrerer Werte $z_k$ des empfangenen Signals, das einem oder mehreren reellen Pilotsymbolen jeweils mit Werten $c_k$ entspricht, und andererseits eines oder mehrerer Werte $z_1$ des empfangenen Signals, das einem bzw. mehreren rein Imaginären Pilotsymbolen jeweils mit Werten $c_1$ entspricht, wobei die Pilotsymbole sowohl entlang der Frequenzachse als auch entlang der Zeitachse ausreichend angenähert sind, um beurteilen zu können, ob der Signalschwund über den Übertragungskanal einen für die Pilotsymbole Im Wesentlichen Identischen komplexen Wert $\alpha$ gehabt hat;

- Mitteln zum Bestimmen reeller Zahlen Re($\beta$) und Im($\beta$) durch Minimieren des folgenden Ausdrucks mit kleinsten Fehlerquadraten:

$$\varepsilon_2^2 = \sum_k \left\| Re(z_k \cdot \beta) - c_k \right\|^2 + \sum_l \left\| Im(z_l \cdot \beta) - c_l \right\|^2$$

wobei das Zeichen $\Sigma$ den Summen-Operator bezeichnet,

wobei ‖x‖ den Absolutwert-Operator der reellen Variablen x bezeichnet,

wobei Re(x) den Realteil-Operator der komplexen Variablen x bezeichnet, und

wobei Im(x) den reinen Imaginärteil-Operator der komplexen Variablen x bezeichnet, und

wobei $\beta$ den Kehrwert von $\alpha$ bezeichnet; und

- Mitteln zum Bestimmen eines geschätzten Wertes $\ddot{\alpha}$ des Wertes $\alpha$ des Signalschwunds über den Übertragungskanal für die betreffenden Pilotsymbole, durch Umkehren der komplexen Zahl Re($\beta$)+i.Im($\beta$).

**13.** Vorrichtung zur Durchführung eines Verfahrens nach einem der Ansprüche 5 bis 7, mit:

- Mitteln zum Auswählen einerseits eines oder mehrerer Werte $z_k$ des empfangenen Signals, das einem oder mehreren reellen Pilotsymbolen jeweils mit Werten $c_k$ entspricht, und andererseits eines oder mehrerer Werte $z_l$ des empfangenen Signals, das einem bzw. mehreren rein imaginären Pilotsymbolen jeweils mit Werten $c_l$ entspricht, wobei die Pilotsymbole sowohl entlang der Frequenzachse als auch entlang der Zeitachse ausreichend angenähert sind, um beurteilen zu können, ob der Signalschwund über den Übertragungskanal einen für die Pilotsymbole Im Wesentlichen identischen komplexen Wert $\alpha$ gehabt hat; und

- Mitteln zum Bestimmen eines geschätzten Wertes $\ddot{\alpha}$ des Signalschwunds über den Übertragungskanal für die betreffenden Pilotsymbole, der definiert ist durch $\ddot{\alpha} = \rho \cdot e^{i \cdot \varphi}$, wobei $\rho$ und $\varphi$ reelle Zahlen sind, die den folgenden Ausdruck mit kleinsten Fehlerquadraten minimieren:

$$\varepsilon_3^2 = \sum_k \left\| Re(z_k \cdot e^{-i \cdot \varphi}) - \rho \cdot c_k \right\|^2 + \sum_l \left\| Im(z_l \cdot e^{-i \cdot \varphi}) - \rho \cdot c_l \right\|^2$$

wobei das Zeichen $\Sigma$ den Summen-Operator bezeichnet,

wobei ‖x‖ den Absolutwert-Operator der reellen Variablen x bezeichnet,

wobei Re(x) den Realteil-Operator der komplexen Variablen x bezeichnet, und

wobei Im(x) den reinen ImagInärteil-Operator der komplexen Variablen x bezeichnet.

**FIG. 1**

FRÉQUENCE

TEMPS

$\nu_0$

$\tau_0$

SIGNAL REÇU

31 — SYNCHRONISATION TRAME

32 — CORRELATION

$z_p$

33 — ESTIMATION CANAL

**FIG. 3**

$\hat{\alpha}_p$

34 — POURSUITE CANAL

$\hat{\alpha}_p$

35 — ESTIMATION SYMBOLES

$\hat{c}_p$

FIG. 2

SYMBOLE PILOTE

SYMBOLE PILOTE SUPPLÉMENTAIRE POUR LA SYNCHRONISATION

EP 1 446 927 B1

91 — SÉLECTION

$z_k$    $z_l$

92 — CALCUL

$u, v, \lambda$

93 — DÉTERMINATION $\hat{\alpha}$

**FIG. 4a**     $\hat{\alpha} = \lambda/u$

41 — SÉLECTION

$z_k$    $z_l$

42 — CALCUL

$\beta = Re(\beta) + i.\,Im(\beta)$

43 — INVERSION $\beta$

$\hat{\alpha} = 1/\beta$    **FIG. 4b**

61 — SÉLECTION

$z_k$    $z_l$

62 — CALCUL

**FIG. 4c**     $\hat{\alpha} = \rho.e^{i.\varphi}$

71    72 G    73 fo    74 SYNCHRONISATION

75 ÉCHANTILLONNAGE    Fe   76

**FIG. 5**

77 MÉMOIRE

78 SÉLECTION    79 CALCUL    80 INVERSION

**EP 1 446 927 B1**

## RÉFÉRENCES CITÉES DANS LA DESCRIPTION

**Documents brevets cités dans la description**

- EP 0734132 A

**Littérature non-brevet citée dans la description**

- Microwave Mobile Communications. John Wiley & Sons, 1974, 19-25
- **BERNARD LE FLOCH et al.** Coded Orthogonal Frequency Division Multiplex. *Proceedings of the IEEE,* Juin 1995, vol. 83 (6